# EUROPEAN PATENT APPLICATION

(11) **EP 4 535 905 A1**
(43) Date of publication of application: **09.04.2025**
(21) Application number: 23826391.7
(22) Date of filing: 20.06.2023
(51) Int. Cl.: H04W 72/12, H04N 21/2385

(54) **COMMUNICATION METHOD AND APPARATUS**

(30) Priority: 24.06.2022 CN 202210731411
(71) Applicant: Huawei Technologies Co., Ltd., Shenzhen, Guangdong 518129 (CN)
(72) Inventor: WANG, Jue, Shenzhen, Guangdong 518129 (CN); FAN, Qiang, Shenzhen, Guangdong 518129 (CN); TANG, Xiaowei, Shenzhen, Guangdong 518129 (CN)
(74) Representative: Pfenning, Meinig & Partner mbB
(86) International application number: PCT/CN2023/101284
(87) International publication number: WO 2023/246744

(57) **Abstract**

This application relates to the field of communication technologies, and discloses a communication method and apparatus. The method includes: A terminal device receives first indication information from an access network device. The first indication information indicates time-frequency positions of M transmission opportunities, an amount of data that can be carried on each of the M transmission opportunities matches a data amount of a first-type video frame, and the data amount of the first-type video frame is less than a data amount of a second-type video frame. The M transmission opportunities include a first transmission opportunity, the first transmission opportunity corresponds to a first video frame, and M is a positive integer. If the first video frame belongs to the second-type video frame, the terminal device sends the first video frame to the access network device on a second transmission opportunity. An amount of data that can be carried on the second transmission opportunity matches the data amount of the second-type video frame. In this way, a problem that an amount of data that can be carried on a transmission opportunity does not match a data amount of a video frame is effectively resolved, and the access network device and the terminal device can transmit a video frame in a semi-static scheduling manner.

## Description

### CROSS-REFERENCE TO RELATED APPLICATIONS

This application claims priority to Chinese Patent Application No. 202210731411.2, filed with the China National Intellectual Property Administration on June 24, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With continuous development of a wireless communication system, a data transmission latency is continuously reduced, and a transmission capacity is increasingly large. Some services requiring high real-time performance and large data capacity, for example, an extended reality (extended reality, XR) service, gradually emerge in the wireless communication system. XR refers to a reality and virtuality combined human-computer interactive environment generated by using a computer technology and a wearable device, and is a collective term of various forms such as augmented reality (augmented reality, AR), virtual reality (virtual reality, VR), and mixed reality (mixed reality, MR).

The XR service is used as an example. How to transmit a video frame of the XR service between an access network device and a terminal device still needs to be further studied.

### SUMMARY

This application provides a communication method and apparatus, to transmit a video frame between an access network device and a terminal device in a semi-static scheduling manner.

According to a first aspect, an embodiment of this application provides a communication method. The method may be applied to a terminal device or a module (for example, a chip) in the terminal device. For example, the method is applied to the terminal device. In the method, the terminal device receives first indication information from an access network device. The first indication information indicates time-frequency positions of M transmission opportunities, an amount of data that can be carried on each of the M transmission opportunities matches a data amount of a first-type video frame, and the data amount of the first-type video frame is less than a data amount of a second-type video frame. The M transmission opportunities include a first transmission opportunity, the first transmission opportunity corresponds to a first video frame, and M is a positive integer. If the first video frame belongs to the second-type video frame, the terminal device sends the first video frame to the access network device on a second transmission opportunity. An amount of data that can be carried on the second transmission opportunity matches the data amount of the second-type video frame.

Herein, the amount of data that can be carried on each of the M transmission opportunities matches the data amount of the first-type video frame. In other words, the amount of data that can be carried on each of the M transmission opportunities does not match the data amount of the second-type video frame. "Matching" may be understood as "being greater than or equal to", and "not matching" may be understood as "being less than". Therefore, that the amount of data that can be carried on each of the M transmission opportunities matches the data amount of the first-type video frame may mean that the amount of data that can be carried on each of the M transmission opportunities is greater than or equal to the data amount of the first-type video frame, and the amount of data that can be carried on each of the M transmission opportunities is less than the data amount of the second-type video frame.

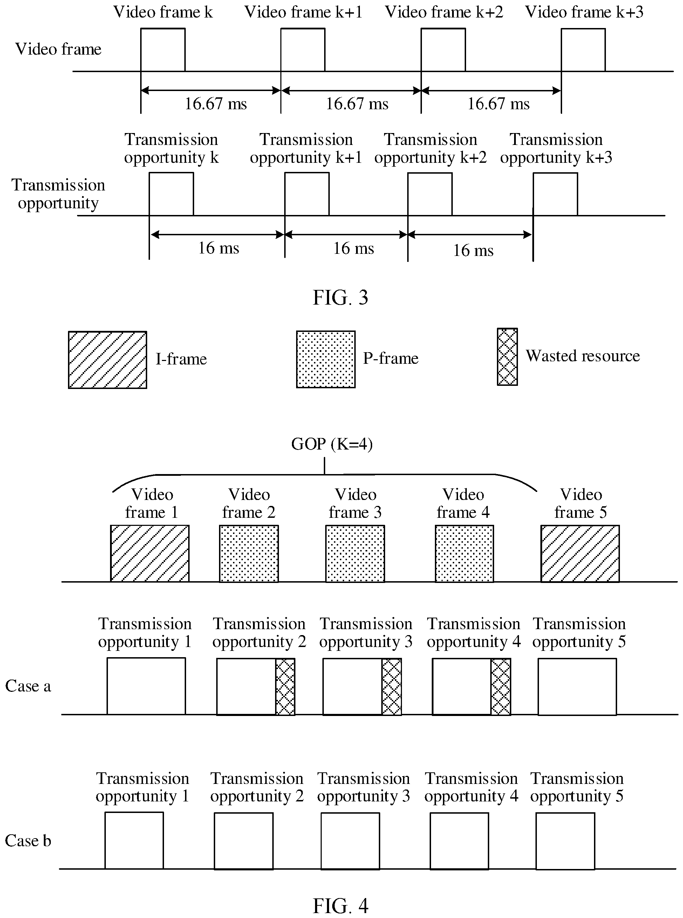

An XR service is used as an example. The XR service may include different types of video frames (for example, an I-frame and a P-frame), and data amounts of the I-frame and the P-frame are different. When the access network device configures a transmission opportunity for the terminal device, generally, amounts of data that can be carried on a plurality of configured transmission opportunities are the same. Therefore, there is a problem that an amount of data that can be carried on a transmission opportunity does not match a data amount of a video frame, and a resource waste may be caused or a transmission latency of a video frame may be high (for details, refer to descriptions in FIG. 4). According to the foregoing method, the access network device indicates the time-frequency positions of the M transmission opportunities to the terminal device, the M transmission opportunities are in one-to-one correspondence with M video frames, and a transmission opportunity corresponding to a video frame may be for transmitting the video frame. For example, the first transmission opportunity corresponds to the first video frame. When the first video frame belongs to the second-type video frame (in other words, the amount of data that can be carried on the first transmission opportunity does not match the data amount of the first video frame), the terminal device may send the first video frame to the access network device on the second transmission opportunity. In this way, a problem that an amount of data that can be carried on a transmission opportunity does not match a data amount of a video frame is effectively resolved, and the access network device and the terminal device can transmit a video frame in a semi-static scheduling manner.

In a possible design, the method further includes: if the first video frame belongs to the first-type video frame, sending the first video frame to the access network device on the first transmission opportunity.

In a possible design, a modulation and coding scheme MCS corresponding to the second transmission opportunity is the same as an MCS corresponding to the first transmission opportunity.

In a possible design, the method further includes: determining a time-frequency position of the second transmission opportunity based on a time-frequency position of the first transmission opportunity, the data amount of the first-type video frame, and the data amount of the second-type video frame. For example, the terminal device may extend a time domain length and/or a frequency domain length of the first transmission opportunity based on a ratio of the data amount of the second-type video frame to the data amount of the first-type video frame, to obtain the second transmission opportunity, and send the second-type video frame on the second transmission opportunity. In this way, because the terminal device determines the time-frequency position of the second transmission opportunity based on the time-frequency position of the first transmission opportunity and the ratio, it is convenient to ensure that the amount of data that can be carried on the second transmission opportunity matches the data amount of the second-type video frame.

In a possible design, the method further includes: receiving second indication information from the access network device, where the second indication information indicates time-frequency positions of N transmission opportunities, an amount of data that can be carried on each of the N transmission opportunities matches the data amount of the second-type video frame, the N transmission opportunities include the second transmission opportunity, and N is a positive integer. In this way, the terminal device can directly determine the time-frequency position of the second transmission opportunity based on an indication of the access network device.

In a possible design, the first transmission opportunity and the second transmission opportunity completely overlap in frequency domain. A time domain start position of the first transmission opportunity is the same as a time domain start position of the second transmission opportunity, or a time domain end position of the first transmission opportunity is the same as a time domain end position of the second transmission opportunity. A time domain length of the second transmission opportunity is greater than a time domain length of the first transmission opportunity. In this way, the terminal device may obtain the second transmission opportunity by extending the time domain length of the first transmission opportunity. This is easy to implement.

In a possible design, the first transmission opportunity includes T1 time units in time domain, and the second transmission opportunity includes T2 time units in time domain; and T2=ceil[(α)•T1], or T2=ceil(α)•T1, ceil represents rounding up, α represents a ratio of the data amount of the second-type video frame to the data amount of the first-type video frame, and both T1 and T2 are positive integers.

In a possible design, the first transmission opportunity and the second transmission opportunity completely overlap in time domain. Frequency domain start positions of the first transmission opportunity and the second transmission opportunity are the same, or frequency domain end positions of the first transmission opportunity and the second transmission opportunity are the same. A frequency domain width of the second transmission opportunity is greater than a frequency domain width of the first transmission opportunity. In this way, the terminal device may obtain the second transmission opportunity by extending the frequency domain width of the first transmission opportunity. This is easy to implement.

In a possible design, the first transmission opportunity includes P1 resource blocks RBs in frequency domain, and the second transmission opportunity includes P2 RBs in frequency domain; and P2=ceil[(α)•P1], or P2=ceil(α)•P1, ceil represents rounding up, α represents a ratio of the data amount of the second-type video frame to the data amount of the first-type video frame, and both P1 and P2 are positive integers.

In a possible design, a time-frequency position of the second transmission opportunity is the same as a time-frequency position of the first transmission opportunity.

In a possible design, the method further includes: determining an MCS corresponding to the second transmission opportunity based on an MCS corresponding to the first transmission opportunity, the data amount of the first-type video frame, and the data amount of the second-type video frame. In this way, because the terminal device determines the MCS corresponding to the second transmission opportunity based on the MCS corresponding to the first transmission opportunity and the ratio, it is convenient to ensure that the amount of data that can be carried on the second transmission opportunity matches the data amount of the second-type video frame.

In a possible design, the method further includes: receiving third indication information from the access network device, where the third indication information indicates an MCS corresponding to the second transmission opportunity, or an offset between the MCS corresponding to the second transmission opportunity and an MCS corresponding to the first transmission opportunity. In this way, the terminal device can directly determine the MCS corresponding to the second transmission opportunity based on an indication of the access network device.

In a possible design, the method further includes: receiving fourth indication information from the access network device, where the fourth indication information indicates the MCS corresponding to the first transmission opportunity.

In a possible design, the method further includes: if the first transmission opportunity is an (n*K+1)^{th} transmission opportunity in the M transmission opportunities, determining that the first video frame belongs to the second-type video frame, where n is an integer greater than or equal to 0, and K is a quantity of video frames included in a transmission periodicity of the second-type video frame.

In a possible design, the M transmission opportunities further include a third transmission opportunity before the first transmission opportunity, the third transmission opportunity corresponds to a second video frame, and the second video frame belongs to the second-type video frame. The method further includes: if a time interval between a time domain start position of the first transmission opportunity and a time domain start position of the third transmission opportunity is equal to first duration, and the first duration is equal to a transmission periodicity of the second-type video frame, determining that the first video frame belongs to the second-type video frame.

In a possible design, the first video frame includes a type identifier, and the type identifier indicates that the first video frame belongs to the second-type video frame. In this way, because the terminal device may determine a type of the first video frame based on the type identifier included in the first video frame, it is convenient to improve accuracy of determining the type of the first video frame by the terminal device.

In a possible design, a 1^{st} data packet of the first video frame includes the type identifier. In this way, the type identifier is carried in the 1^{st} data packet of the first video frame, so that it is convenient for the terminal device to determine the type of the video frame as early as possible.

According to a second aspect, an embodiment of this application provides a communication method. The method may be applied to an access network device or a module (for example, a chip) in the access network device. The method may alternatively be applied to a logical module or software that can implement all or some of functions of the access network device. For example, the method is applied to the access network device. In the method, the access network device sends first indication information to a terminal device. The first indication information indicates time-frequency positions of M transmission opportunities, an amount of data that can be carried on each of the M transmission opportunities matches a data amount of a first-type video frame, and the data amount of the first-type video frame is less than a data amount of a second-type video frame. The M transmission opportunities include a first transmission opportunity, the first transmission opportunity corresponds to a first video frame, and M is a positive integer. If the first video frame belongs to the second-type video frame, the first video frame is sent to the access network device on a second transmission opportunity. An amount of data that can be carried on the second transmission opportunity matches the data amount of the second-type video frame.

In a possible design, a modulation and coding scheme MCS corresponding to the second transmission opportunity is the same as an MCS corresponding to the first transmission opportunity.

In a possible design, the method further includes: determining a time-frequency position of the second transmission opportunity based on a time-frequency position of the first transmission opportunity, the data amount of the first-type video frame, and the data amount of the second-type video frame.

In a possible design, the method further includes: sending second indication information to the terminal device, where the second indication information indicates time-frequency positions of N transmission opportunities, an amount of data that can be carried on each of the N transmission opportunities matches the data amount of the second-type video frame, the N transmission opportunities include the second transmission opportunity, and N is a positive integer.

In a possible design, the first transmission opportunity and the second transmission opportunity completely overlap in frequency domain. A time domain start position of the first transmission opportunity is the same as a time domain start position of the second transmission opportunity, or a time domain end position of the first transmission opportunity is the same as a time domain end position of the second transmission opportunity. A time domain length of the second transmission opportunity is greater than a time domain length of the first transmission opportunity.

In a possible design, the first transmission opportunity includes T1 time units in time domain, and the second transmission opportunity includes T2 time units in time domain; and T2=ceil[(α)•T1], or T2=ceil(α)•T1, ceil represents rounding up, α represents a ratio of the data amount of the second-type video frame to the data amount of the first-type video frame, and both T1 and T2 are positive integers.

In a possible design, the first transmission opportunity and the second transmission opportunity completely overlap in time domain. Frequency domain start positions of the first transmission opportunity and the second transmission opportunity are the same, or frequency domain end positions of the first transmission opportunity and the second transmission opportunity are the same. A frequency domain width of the second transmission opportunity is greater than a frequency domain width of the first transmission opportunity.

In a possible design, the first transmission opportunity includes P1 resource blocks RBs in frequency domain, and the second transmission opportunity includes P2 RBs in frequency domain; and P2=ceil[(α)•P1], or P2=ceil(α)•P1, ceil represents rounding up, α represents a ratio of the data amount of the second-type video frame to the data amount of the first-type video frame, and both P1 and P2 are positive integers.

In a possible design, a time-frequency position of the second transmission opportunity is the same as a time-frequency position of the first transmission opportunity.

In a possible design, the method further includes: determining an MCS corresponding to the second transmission opportunity based on an MCS corresponding to the first transmission opportunity, the data amount of the first-type video frame, and the data amount of the second-type video frame.

In a possible design, the method further includes: sending third indication information to the terminal device, where the third indication information indicates an MCS corresponding to the second transmission opportunity, or an offset between the MCS corresponding to the second transmission opportunity and an MCS corresponding to the first transmission opportunity.

In a possible design, the method further includes: sending fourth indication information to the terminal device, where the fourth indication information indicates the MCS corresponding to the first transmission opportunity.

In a possible design, the method further includes: if the first transmission opportunity is an (n*K+1)^{th} transmission opportunity in the M transmission opportunities, determining that the first video frame belongs to the second-type video frame, where n is an integer greater than or equal to 0, and K is a quantity of video frames included in a transmission periodicity of the second-type video frame.

In a possible design, the M transmission opportunities further include a third transmission opportunity before the first transmission opportunity, the third transmission opportunity corresponds to a second video frame, and the second video frame belongs to the second-type video frame. The method further includes: if a time interval between a time domain start position of the first transmission opportunity and a time domain start position of the third transmission opportunity is equal to first duration, and the first duration is equal to a transmission periodicity of the second-type video frame, determining that the first video frame belongs to the second-type video frame.

In a possible design, the first video frame includes a type identifier, and the type identifier indicates that the first video frame belongs to the second-type video frame.

In a possible design, a 1^{st} data packet of the first video frame includes the type identifier.

It may be understood that the method that claims protection in the second aspect corresponds to the method that claims protection in the first aspect. Therefore, for beneficial effects of related technical features in the second aspect, refer to the descriptions in the first aspect. Details are not described again.

According to a third aspect, an embodiment of this application provides a communication method. The method may be applied to a terminal device or a module (for example, a chip) in the terminal device. For example, the method is applied to the terminal device. In the method, the terminal device receives first indication information from an access network device. The first indication information indicates time-frequency positions of M transmission opportunities, an amount of data that can be carried on each of the M transmission opportunities matches a data amount of a first-type video frame, and the data amount of the first-type video frame is less than a data amount of a second-type video frame. The M transmission opportunities include a first transmission opportunity, the first transmission opportunity corresponds to a first video frame, and M is a positive integer. If the first video frame belongs to the second-type video frame, the terminal device sends the first video frame to the access network device on the first transmission opportunity and a second transmission opportunity. A total amount of data that can be carried on the first transmission opportunity and the second transmission opportunity matches the data amount of the second-type video frame.

In a possible design, the method further includes: if the first video frame belongs to the first-type video frame, sending the first video frame to the access network device on the first transmission opportunity.

In a possible design, an MCS corresponding to the second transmission opportunity is the same as an MCS corresponding to the first transmission opportunity.

In a possible design, the method further includes: determining a time-frequency position of the second transmission opportunity based on a time-frequency position of the first transmission opportunity, the data amount of the first-type video frame, and the data amount of the second-type video frame.

In a possible design, the method further includes: receiving second indication information from the access network device, where the second indication information indicates time-frequency positions of N transmission opportunities, the N transmission opportunities include the second transmission opportunity, and N is a positive integer.

In a possible design, frequency domain widths of the first transmission opportunity and the second transmission opportunity are the same, the first transmission opportunity includes T1 time units in time domain, and the second transmission opportunity includes T3 time units in time domain; and T3=ceil[(α)•T1]-T1, or T3=ceil(α)•T1-T1, ceil represents rounding up, α represents a ratio of the data amount of the second-type video frame to the data amount of the first-type video frame, and both T1 and T3 are positive integers.

In a possible design, time domain lengths of the first transmission opportunity and the second transmission opportunity are the same, the first transmission opportunity includes P1 resource blocks RBs in frequency domain, and the second transmission opportunity includes P3 RBs in frequency domain; and P3=ceil[(α)•P1]-P1, or P3=ceil(α)•P1-P1, ceil represents rounding up, α represents a ratio of the data amount of the second-type video frame to the data amount of the first-type video frame, and both P1 and P3 are positive integers.

In a possible design, the method further includes: if the first transmission opportunity is an (n*K+1)^{th} transmission opportunity in the M transmission opportunities, determining that the first video frame belongs to the second-type video frame, where n is an integer greater than or equal to 0, and K is a quantity of video frames included in a transmission periodicity of the second-type video frame.

In a possible design, the M transmission opportunities further include a third transmission opportunity before the first transmission opportunity, the third transmission opportunity corresponds to a second video frame, and the second video frame belongs to the second-type video frame. The method further includes: if a time interval between a time domain start position of the first transmission opportunity and a time domain start position of the third transmission opportunity is equal to first duration, and the first duration is equal to a transmission periodicity of the second-type video frame, determining that the first video frame belongs to the second-type video frame.

In a possible design, the first video frame includes a type identifier, and the type identifier indicates that the first video frame belongs to the second-type video frame.

In a possible design, a 1^{st} data packet of the first video frame includes the type identifier.

According to a fourth aspect, an embodiment of this application provides a communication method. The method may be applied to an access network device or a module (for example, a chip) in the access network device. The method may alternatively be applied to a logical module or software that can implement all or some of functions of the access network device. For example, the method is applied to an access network device. In the method, the access network device sends first indication information to a terminal device. The first indication information indicates time-frequency positions of M transmission opportunities, an amount of data that can be carried on each of the M transmission opportunities matches a data amount of a first-type video frame, and the data amount of the first-type video frame is less than a data amount of a second-type video frame. The M transmission opportunities include a first transmission opportunity, the first transmission opportunity corresponds to a first video frame, and M is a positive integer. If the first video frame belongs to the second-type video frame, the access network device receives the first video frame from the terminal device on the first transmission opportunity and a second transmission opportunity. A total amount of data that can be carried on the first transmission opportunity and the second transmission opportunity matches the data amount of the second-type video frame.

In a possible design, the method further includes: if the first video frame belongs to the first-type video frame, sending the first video frame to the access network device on the first transmission opportunity.

In a possible design, an MCS corresponding to the second transmission opportunity is the same as an MCS corresponding to the first transmission opportunity.

In a possible design, the method further includes: determining a time-frequency position of the second transmission opportunity based on a time-frequency position of the first transmission opportunity, the data amount of the first-type video frame, and the data amount of the second-type video frame.

In a possible design, the method further includes: sending second indication information to the terminal device, where the second indication information indicates time-frequency positions of N transmission opportunities, the N transmission opportunities include the second transmission opportunity, and N is a positive integer.

In a possible design, frequency domain widths of the first transmission opportunity and the second transmission opportunity are the same, the first transmission opportunity includes T1 time units in time domain, and the second transmission opportunity includes T3 time units in time domain; and T3=ceil[(α)•T1]-T1, or T3=ceil(α)•T1-T1, ceil represents rounding up, α represents a ratio of the data amount of the second-type video frame to the data amount of the first-type video frame, and both T1 and T3 are positive integers.

In a possible design, time domain lengths of the first transmission opportunity and the second transmission opportunity are the same, the first transmission opportunity includes P1 resource blocks RBs in frequency domain, and the second transmission opportunity includes P3 RBs in frequency domain; and P3=ceil[(α)•P1]-P1, or P3=ceil(α)•P1-P1, ceil represents rounding up, α represents a ratio of the data amount of the second-type video frame to the data amount of the first-type video frame, and both P1 and P3 are positive integers.

In a possible design, the method further includes: if the first transmission opportunity is an (n*K+1)^{th} transmission opportunity in the M transmission opportunities, determining that the first video frame belongs to the second-type video frame, where n is an integer greater than or equal to 0, and K is a quantity of video frames included in a transmission periodicity of the second-type video frame.

In a possible design, the M transmission opportunities further include a third transmission opportunity before the first transmission opportunity, the third transmission opportunity corresponds to a second video frame, and the second video frame belongs to the second-type video frame. The method further includes: if a time interval between a time domain start position of the first transmission opportunity and a time domain start position of the third transmission opportunity is equal to first duration, and the first duration is equal to a transmission periodicity of the second-type video frame, determining that the first video frame belongs to the second-type video frame.

In a possible design, the first video frame includes a type identifier, and the type identifier indicates that the first video frame belongs to the second-type video frame.

In a possible design, a 1^{st} data packet of the first video frame includes the type identifier.

According to a fifth aspect, this application provides a communication apparatus. The communication apparatus has a function for implementing the first aspect or the third aspect. For example, the communication apparatus includes a corresponding module, unit, or means (means) for performing an operation in the first aspect or the third aspect. The module, the unit, or the means may be implemented by software, may be implemented by hardware, or may be implemented by hardware by executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to operations in the first aspect or the third aspect.

In a possible design, the communication apparatus includes a processor. The processor may be configured to be coupled to a memory. The memory may store a necessary computer program or instructions for implementing functions in the first aspect or the third aspect. The processor may execute the computer program or the instructions stored in the memory. When the computer program or the instructions are executed, the communication apparatus is enabled to implement the method in any one of the possible designs or implementations of the first aspect or the third aspect.

In a possible design, the communication apparatus includes a processor and a memory. The memory may store a necessary computer program or instructions for implementing the functions in the first aspect or the third aspect. The processor may execute the computer program or the instructions stored in the memory. When the computer program or the instructions are executed, the communication apparatus is enabled to implement the method in any one of the possible designs or implementations of the first aspect or the third aspect.

In a possible design, the communication apparatus includes a processor and an interface circuit. The processor is configured to: communicate with another apparatus through the interface circuit, and perform the method in any one of the possible designs or implementations of the first aspect or the third aspect.

According to a sixth aspect, this application provides a communication apparatus. The communication apparatus has a function for implementing the second aspect or the fourth aspect. For example, the communication apparatus includes a corresponding module, unit, or means for performing an operation in the second aspect or the fourth aspect. The function, the unit, or the means may be implemented by software, may be implemented by hardware, or may be implemented by hardware by executing corresponding software.

In a possible design, the communication apparatus includes a processing unit and a communication unit. The communication unit may be configured to receive/send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in the second aspect or the fourth aspect.

In a possible design, the communication apparatus includes a processor. The processor may be configured to be coupled to a memory. The memory may store a necessary computer program or instructions for implementing functions in the second aspect or the fourth aspect. The processor may execute the computer program or the instructions stored in the memory. When the computer program or the instructions are executed, the communication apparatus is enabled to implement the method in any one of the possible designs or implementations of the second aspect or the fourth aspect.

In a possible design, the communication apparatus includes a processor and a memory. The memory may store a necessary computer program or instructions for implementing the functions in the second aspect or the fourth aspect. The processor may execute the computer program or the instructions stored in the memory. When the computer program or the instructions are executed, the communication apparatus is enabled to implement the method in any one of the possible designs or implementations of the second aspect or the fourth aspect.

In a possible design, the communication apparatus includes a processor and an interface circuit. The processor is configured to: communicate with another apparatus through the interface circuit, and perform the method in any one of the possible designs or implementations of the second aspect or the fourth aspect.

It may be understood that in the fifth aspect and the sixth aspect, the processor may be implemented by hardware or software. When the processor is implemented by hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a seventh aspect, this application provides a communication system. The communication system may include the communication apparatus in the fifth aspect and the communication apparatus in the sixth aspect.

According to an eighth aspect, this application provides a computer-readable storage medium. The computer-readable storage medium stores computer-readable instructions. When a computer reads and executes the computer-readable instructions, the computer is enabled to perform the method in any one of the possible designs of the first aspect to the fourth aspect.

According to a ninth aspect, this application provides a computer program product. When a computer reads and executes the computer program product, the computer is enabled to perform the method in any one of the possible designs of the first aspect to the fourth aspect.

According to a tenth aspect, this application provides a chip. The chip includes a processor. The processor is coupled to a memory, and is configured to read and execute a software program stored in the memory, to perform the method in any one of the possible designs of the first aspect to the fourth aspect.

### BRIEF DESCRIPTION OF DRAWINGS

FIG. 1 is a diagram of an architecture of a communication system to which an embodiment of this application is applied;
FIG. 2 is a diagram of transmission of a plurality of video frames according to an embodiment of this application;
FIG. 3 is a diagram in which a periodicity of a transmission opportunity does not match a transmission periodicity of a video frame in time domain according to an embodiment of this application;
FIG. 4 is a diagram in which an amount of data that can be carried on a transmission opportunity does not match a data amount of a video frame according to an embodiment of this application;
FIG. 5 is a schematic flowchart corresponding to a communication method according to an embodiment of this application;
FIG. 6 is a diagram of M transmission opportunities according to an embodiment of this application;
FIG. 7 is a diagram of extending a transmission opportunity by using an extension rule 1 according to an embodiment of this application;
FIG. 8 is a diagram of extending a transmission opportunity by using an extension rule 2 according to an embodiment of this application;
FIG. 9 is a diagram of N transmission opportunities according to an embodiment of this application;
FIG. 10 is another diagram of N transmission opportunities according to an embodiment of this application;
FIG. 11 is a schematic flowchart corresponding to a communication method according to an embodiment of this application;
FIG. 12 is a schematic flowchart corresponding to a communication method according to an embodiment of this application;
FIG. 13 is a diagram of a second transmission opportunity according to an embodiment of this application;
FIG. 14 is another diagram of N transmission opportunities according to an embodiment of this application;
FIG. 15 is another diagram of N transmission opportunities according to an embodiment of this application;
FIG. 16 is a schematic flowchart corresponding to a communication method according to an embodiment of this application;
FIG. 17 is a block diagram of a possible example of an apparatus according to an embodiment of this application;
FIG. 18 is a diagram of a structure of a terminal device according to an embodiment of this application; and
FIG. 19 is a diagram of a structure of a network device according to an embodiment of this application.

### DESCRIPTION OF EMBODIMENTS

The following describes technical solutions in embodiments of this application with reference to the accompanying drawings in embodiments of this application.

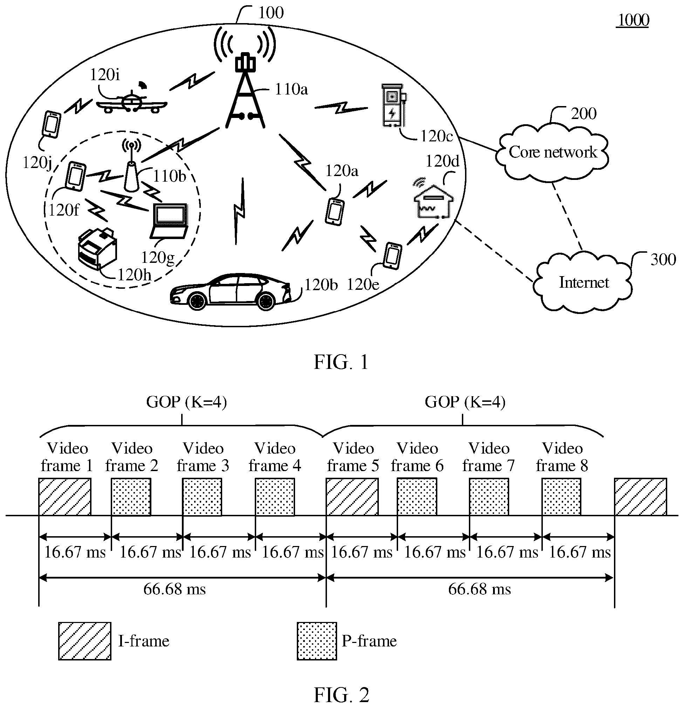

FIG. 1 is a diagram of an architecture of a communication system to which an embodiment of this application is applied. As shown in FIG. 1, the communication system 1000 includes a radio access network 100 and a core network 200. Optionally, the communication system 1000 may further include an internet 300. The radio access network 100 may include at least one radio access network device, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an uncrewed aerial vehicle.

In FIG. 1, a terminal device may be connected to a radio access network device, and the radio access network device may be connected to a core network device in the core network. The core network device and the radio access network device may be independent and different physical devices, or a function of the core network device and a logical function of the radio access network device may be integrated into a same physical device, or some of functions of the core network device and some of functions of the radio access network device may be integrated into one physical device. Terminal devices may be connected to each other in a wired or wireless manner, and radio access network devices may be connected to each other in a wired or wireless manner. FIG. 1 is merely a diagram. The communication system may further include another device, for example, a wireless relay device and a wireless backhaul device, which are not drawn in FIG. 1.

The following describes the radio access network device and the terminal device.

### (1) Radio access network device

The radio access network device may also be referred to as an access network device. The access network device may be a base station, an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like. The access network device may alternatively be a module or unit that completes some of functions of a base station, for example, may be a central unit (central unit, CU), or may be a distributed unit (distributed unit, DU). The access network device may be a macro base station (for example, 110a in FIG. 1), or may be a micro base station or an indoor base station (for example, 110b in FIG. 1), or may be a relay node, a donor node, or the like.

A specific technology and a specific device form used by the access network device are not limited in embodiments of this application. In embodiments of this application, an apparatus configured to implement functions of an access device may be the access network device, or may be an apparatus that can support the access network device in implementing the functions, for example, a chip system. The apparatus may be installed in the access network device. The chip system may include a chip, or may include a chip and another discrete device. In embodiments of this application, the functions of the access network device may alternatively be implemented via a plurality of network function entities, and each network function entity is configured to implement some of functions of the access network device. These network function entities may be network elements in a hardware device, may be software functions run on dedicated hardware, or may be virtualized functions instantiated on a platform (for example, a cloud platform). In the technical solutions provided in embodiments of this application, the technical solutions provided in embodiments of this application are described by using an example in which the apparatus configured to implement the functions of the access network device is the access network device.

### (2) Terminal device

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form used by the terminal device are not limited in embodiments of this application.

In embodiments of this application, an apparatus configured to implement functions of the terminal device may be the terminal device, or may be an apparatus that can support the terminal device in implementing the functions, for example, a chip system. The apparatus may be installed in the terminal device. In the technical solutions provided in embodiments of this application, the technical solutions provided in embodiments of this application are described by using an example in which the apparatus configured to implement the functions of the terminal device is the terminal device.

In addition, a same terminal device or access network device may provide different functions in different application scenarios. For example, the mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

Roles of the access network device and the terminal device may be relative. For example, the helicopter or the uncrewed aerial vehicle 120i in FIG. 1 may be configured as a mobile base station. For the terminal device 120j that accesses the radio access network 100 via 120i, the terminal device 120i is a base station. However, for the base station 110a, 120i is a terminal device. In other words, 110a communicates with 120i by using a wireless air interface protocol. Certainly, 110a and 120i may alternatively communicate with each other by using an interface protocol between base stations. In this case, for 110a, 120i is also a base station. Therefore, both the radio access network device and the terminal device may be collectively referred to as communication apparatuses, 110a and 110b in FIG. 1 may be referred to as communication apparatuses having a base station function, and 120a to 120j in FIG. 1 may be referred to as communication apparatuses having a terminal device function.

The access network device and the terminal device may be at fixed positions, or may be movable. The access network device and the terminal device may be deployed on land, including an indoor or outdoor device, or a handheld or vehicle-mounted device; may be deployed on water; or may be deployed on an airplane, a balloon, and an artificial satellite in the air. Application scenarios of the access network device and the terminal device are not limited in embodiments of this application.

Communication between an access network device and a terminal device, between access network devices, or between terminal devices may be performed by using a licensed spectrum, an unlicensed spectrum, or both a licensed spectrum and an unlicensed spectrum, and may be performed by using a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

The communication system shown in FIG. 1 may support various radio access technologies (radio access technologies, RATs). For example, the communication system shown in FIG. 1 may be a 4th generation (4th generation, 4G) communication system (which may also be referred to as a long term evolution (long term evolution, LTE) communication system), a 5G communication system (which may also be referred to as a new radio (new radio, NR) communication system), or a future-oriented evolved system such as a 6G communication system. The communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the communication system evolves and a new service scenario emerges.

The following first describes related technical features in embodiments of this application. It should be noted that these explanations are intended to make embodiments of this application easier to understand, but should not be considered as a limitation on the protection scope claimed in this application.

### 1. Video frame

A video may be composed of consecutive images (pictures, photos, or the like) played consecutively. When 24 images are played quickly per second, human eyes consider that the images are consecutive images (namely, a video). A frame rate indicates a quantity of images played per second. For example, when the frame rate is 24 frames per second (24 fps), it represents that 24 images are played per second; when the frame rate is 60 fps, it represents that 60 images are played per second; and so on. One video frame may be understood as one image. To be specific, one video frame may include a plurality of data packets corresponding to one image, and a data amount of one video frame is a sum of data amounts of the plurality of data packets included in the video frame. When the frame rate is 60 frames, a transmission periodicity of a video frame is 1000/60=50/3 milliseconds (ms), and is approximately equal to 16.67 ms. For example, the frame rate is 60 frames. FIG. 2 is a diagram of transmission of a plurality of video frames. A video frame 1 to a video frame 8 in FIG. 2 are eight consecutive video frames.

There may be a plurality of types of video frames. For example, in a possible division manner, the types of the video frames include an I-frame, a P-frame, and a B-frame. The I-frame is an intra-coded image frame, is an independent frame that carries all information, can be decoded independently without reference to other images, and may be simply understood as a static picture. The P-frame is a predictive coded image frame, needs to be encoded with reference to a previous I-frame, and indicates a difference between a picture of a current frame and that of a previous frame (where the previous frame may be an I-frame or a P-frame). During decoding, a previously buffered picture needs to be superimposed with the difference defined in the current frame, to generate a final picture. The B-frame is a bidirectional predictive coded frame, records differences between a current frame and a previous frame and a next frame. In other words, to decode the B-frame, not only a previous buffered picture needs to be obtained, but also a decoded picture needs to be obtained. The previous picture and the next picture are superimposed with data of the current frame, to obtain a final picture. Generally, data amounts of different video frames belonging to a same type are basically the same. Generally, a data amount of one I-frame may be greater than a data amount of one P-frame, and a data amount of one P-frame may be greater than a data amount of one B-frame.

Video frames of a same service may include an I-frame and a P-frame, or may include an I-frame and a B-frame, or may include an I-frame, a P-frame, and a B-frame.

An XR service is used as an example. Video frames of the XR service may include an I-frame and a P-frame. In an XR service model based on a group of pictures (group of pictures, GOP), one group of pictures may include a plurality of consecutive video frames, and a plurality of video frames included in each group of pictures may belong to different types. For example, a 1^{st} video frame in each group of pictures is an I-frame, and remaining video frames are P-frames. A quantity of video frames included in a GOP may be referred to as a size of a group of pictures. For example, the size of the group of pictures is K. In FIG. 2, K=4 is used as an example for illustration. When K=4, duration corresponding to one group of pictures may be equal to 4*16.67 ms (that is, 66.68 ms), and a transmission periodicity of an I-frame may be equal to duration (that is, 66.68 ms) corresponding to one group of pictures.

### 2. Semi-static scheduling

An access network device may schedule uplink and downlink transmission resources for a terminal device in two manners: dynamic scheduling and semi-static scheduling. In the dynamic scheduling, the access network device may send control information to the terminal device through a control channel, to allocate a transmission parameter of a data channel to the terminal device. The control channel is, for example, a physical downlink control channel (physical downlink control channel, PDCCH), and the control information may be, for example, downlink control information (downlink control information, DCI). The data channel may be, for example, a physical downlink shared channel (physical downlink shared channel, PDSCH) or a physical uplink shared channel (physical uplink shared channel, PUSCH). For example, the control information may indicate a time-frequency position to which the data channel is mapped (for example, a time domain symbol or a frequency domain resource block (resource block, RB) to which the data channel is mapped), so that the access network device and the terminal device may transmit downlink data (for example, data carried on the PDSCH) and/or uplink data (for example, data carried on the PUSCH) through the data channel at the time-frequency position.

In the semi-static scheduling, the access network device may allocate periodic uplink and downlink transmission resources to the terminal device. Semi-static scheduling for allocating an uplink transmission resource may be referred to as a configured grant (configured grant, CG), and semi-static scheduling for allocating a downlink transmission resource may be referred to as semi-persistent scheduling (semi-persistent scheduling, SPS). Further, for an uplink, a transmission resource for performing one time of uplink transmission may be referred to as an uplink transmission opportunity (which may be referred to as a transmission opportunity for short), and the uplink transmission opportunity may alternatively be replaced with another possible description, for example, a CG resource, a PUSCH resource, a PUSCH opportunity, or a PUSCH opportunity. For a downlink, a transmission resource for performing one time of downlink transmission may be referred to as a downlink transmission opportunity (which may be referred to as a transmission opportunity for short), and the downlink transmission opportunity may alternatively be replaced with another possible description, for example, an SPS resource, a PDSCH resource, a PDSCH opportunity, or a PDSCH opportunity.

### (1) SPS

In an SPS mechanism, the access network device may first configure some of parameters (for example, a periodicity) of at least one set of transmission opportunities for the terminal device by using a radio resource control (radio resource control, RRC) message. For example, the RRC message may include an sps-Config field corresponding to each of the at least one set of transmission opportunities, and parameters such as a periodicity of each set of transmission opportunities may be carried in the sps-Config field corresponding to each set of transmission opportunities. One set of transmission opportunities may include a plurality of transmission opportunities that periodically appear.

Further, for each of the at least one set of transmission opportunities, the access network device may send an activation command to the terminal device, where the activation command is for activating the set of transmission opportunities. The activation command may be, for example, DCI in a PDCCH, and the DCI may be scrambled by using a configured scheduling radio network temporary identifier (configured scheduling radio network temporary identifier, CS-RNTI). For example, the activation command may include the other parameters of the set of transmission opportunities. For example, the other parameters include a parameter 1 and a parameter 2. The parameter 1 indicates a frequency domain position of each transmission opportunity in the set of transmission opportunities, and frequency domain positions of different transmission opportunities belonging to a same set of transmission opportunities are the same. In other words, different transmission opportunities belonging to a same set of transmission opportunities completely overlap in frequency domain. In other words, different transmission opportunities have a same frequency domain start position, a same frequency domain end position, and a same frequency domain width. A frequency domain width of a transmission opportunity may be a quantity of consecutive RBs included in the transmission opportunity in frequency domain. The parameter 2 indicates a time domain position of each transmission opportunity in the set of transmission opportunities. Different transmission opportunities belonging to a same set of transmission opportunities have a same time domain length. A time domain length of a transmission opportunity may be a quantity of consecutive symbols of the transmission opportunity in time domain.

The parameter 1 may indicate a frequency domain position of a transmission opportunity in a plurality of manners. For example, in a manner 1, the parameter 1 includes a bitmap, and the bitmap indicates a resource block group (resource block group, RBG) included in the transmission opportunity. In a manner 2, the parameter 1 includes a resource indication value (resource indication value, RIV), and the RIV indicates a start RB (which may be represented as RBₛₜₐᵣₜ) of the transmission opportunity and a quantity (which may be represented as L_{RB}) of consecutive RBs in frequency domain.

The parameter 2 may indicate a time domain position of a transmission opportunity in a plurality of manners. For example, the parameter 2 includes a time domain resource assignment (time domain resource assignment, TDRA) field, and the TDRA field includes K0 and a start and length indicator value (start and length indicator value, SLIV). K0 indicates a slot (slot) offset between the PDCCH for carrying the activation command and a 1^{st} transmission opportunity in the set of transmission opportunities, and the SLIV indicates a start symbol position of the 1^{st} transmission opportunity in the set of transmission opportunities and a time domain length of each transmission opportunity in the set of transmission opportunities.

For example, if a system frame number (system frame number, SFN) and a slot number that correspond to a time domain position of the 1^{st} transmission opportunity indicated by the access network device by using the parameter 2 are respectively denoted as SFN_{start time} and slot_{start time}, the terminal device may determine a time domain start position of an N^{th} transmission opportunity by using the following formula, that is, a specific slot of a specific system frame in which the time domain start position of the N^{th} transmission opportunity appears, or this is understood as that if the SFN and the slot number in the frame satisfy the following formula, the terminal device may determine that the time domain start position of the N^{th} transmission opportunity is in a slot whose slot number is the slot number in the frame in a system frame whose system frame number is the SFN: (numberOfSlotsPerFrame*SFN+slot number in the frame)=[(numberOfSlotsPerFrame*SFNstart time+slotstart time)+N*periodicity*numberOfSlotsPerFrame/10] modulo (1024*numberOfSlotsPerFrame)

A value range of the SFN is 0, 1, 2, ..., 1023, a value range of the slot number in the frame is 0, 1, 2, ..., numberOfSlotsPerFrame-1, numberOfSlotsPerFrame represents a quantity of slots included in one system frame, periodicity represents a periodicity of the set of transmission opportunities configured in the RRC message, and modulo represents a modulo operation.

### (2) CG

The CG may support two types: a CG type 1 and a CG type 2. A difference between the CG type 1 and the CG type 2 lies in a manner of activating a transmission opportunity. The CG type 1 means that the access network device configures a periodicity of each of the at least one set of transmission opportunities and indicates a specific time-frequency position by using the RRC message. For example, the specific time-frequency position is indicated by using the parameter 1 and the parameter 2. In this case, a periodicity parameter, the parameter 1, and the parameter 2 are all carried in the RRC message, and once the terminal device correctly receives the RRC message, the configuration takes effect immediately (in other words, the configuration is activated immediately). The CG type 2 is similar to the SPS. To be specific, the access network device may configure parameters such as the periodicity of the at least one set of transmission opportunities by using the RRC message. Then, for each of the at least one set of transmission opportunities, the access network device may activate and indicate a time-frequency position of each transmission opportunity in the set of transmission opportunities by using the DCI.

### 3. Enhanced semi-static scheduling technology

Uplink transmission is used as an example. After an access network device configures and activates a set of transmission opportunities for a terminal device through a CG, the terminal device may send a video frame to the access network device on the set of transmission opportunities. However, a minimum unit of a periodicity of a transmission opportunity is 1 ms, and a transmission periodicity of the video frame may not be an integer multiple of 1 ms. For example, when a frame rate is 60 fps, the transmission periodicity of the video frame is approximately 16.67 ms. Consequently, the periodicity of the transmission opportunity may not match the transmission periodicity of the video frame in time domain, and a high transmission latency of the video frame and a waste of transmission resources may be caused.

Specifically, as shown in FIG. 3, for example, a periodicity of the set of transmission opportunities configured by the access network device for the terminal device is 16 ms, and the set of transmission opportunities may include a transmission opportunity k, a transmission opportunity k+1, a transmission opportunity k+2, a transmission opportunity k+3, and so on. When a video frame k arrives, because arrival time of the video frame k is before a time domain start position of the transmission opportunity k, the terminal device can send the video frame k on the transmission opportunity k. When a video frame k+1 arrives, because arrival time of the video frame k+1 is before a time domain start position of the transmission opportunity k+1, the terminal device can send the video frame k+1 on the transmission opportunity k+1. When a video frame k+2 arrives, because arrival time of the video frame k+2 is after a time domain start position of the transmission opportunity k+2, the terminal device cannot send the video frame k+2 on the transmission opportunity k+2, but can send the video frame k+2 only on the transmission opportunity k+3. In this case, no data is transmitted on the transmission opportunity k+2, and a waste of transmission resources is caused. In addition, because the video frame k+2 is delayed to be sent on the transmission opportunity k+3, a transmission latency of the video frame is high.

Based on this, embodiments of this application provide a plurality of enhanced semi-static scheduling technologies, so that a periodicity of a transmission opportunity matches a transmission periodicity of a video frame in time domain. The following describes, with reference to a configuration manner 1 and a configuration manner 2, the enhanced semi-static scheduling technologies provided in embodiments of this application.

### (1) Configuration manner 1

In the configuration manner 1, the access network device may configure a set of transmission opportunities with irregular periodicities for the terminal device.

Specifically, in a possible implementation, the access network device configures a reference periodicity and a periodicity increment sequence of the set of transmission opportunities for the terminal device. Duration of the reference periodicity may be obtained by rounding down a transmission periodicity of a video frame. The periodicity increment sequence may include a plurality of periodicity increments. For example, the periodicity increment sequence includes three periodicity increments. In this case, it indicates that duration of a 1^{st} periodicity in every three periodicities is equal to a sum of the duration of the reference periodicity and a 1^{st} periodicity increment in the periodicity increment sequence, duration of a 2^{nd} periodicity is equal to a sum of the duration of the reference periodicity and a 2^{nd} periodicity increment in the periodicity increment sequence, and duration of a 3^{rd} periodicity is equal to a sum of the duration of the reference periodicity and a 3^{rd} periodicity increment in the periodicity increment sequence. For example, if a transmission periodicity of a video frame is 50/3 ms (which is approximately equal to 16.67 ms), the duration of the reference periodicity may be 16 ms, and a periodicity increment may be [1 ms, 1 ms, 0]. In this case, duration of irregular periodicities configured by the access network device for the terminal device is sequentially [17 ms, 17 ms, 16 ms, 17 ms, 17 ms, 16 ms, ...].

The foregoing implementation is merely an example. The access network device may alternatively configure the set of transmission opportunities with the irregular periodicities for the terminal device by configuring another possible parameter. This is not limited in embodiments of this application.

### (2) Configuration manner 2

In the configuration manner 2, the access network device may configure a plurality of sets of transmission opportunities with a same periodicity but different time domain start positions for the terminal device. For example, when a transmission periodicity of a video frame is 16.67 ms, the access network device may configure three sets of transmission opportunities for the terminal device, periodicities of the three sets of transmission opportunities are all 50 ms, and intervals between time domain start positions of the three sets of transmission opportunities are 17 ms, 17 ms, and 16 ms.

It may be understood that differences between the configuration manner 1 and the configuration manner 2 and the semi-static scheduling described above are mainly described herein. For content other than the differences, refer to the semi-static scheduling described above.

### 4. Modulation and coding scheme corresponding to a transmission opportunity

An access network device may indicate a modulation and coding scheme (modulation and coding scheme, MCS) corresponding to a transmission opportunity to a terminal device, so that the access network device and the terminal device may transmit a video frame on the transmission opportunity based on the MCS corresponding to the transmission opportunity. Uplink transmission is used as an example. The access network device may indicate, to the terminal device, an MCS corresponding to a transmission opportunity configured for the terminal device, and then the terminal device may send a video frame to the access network device on the transmission opportunity based on the MCS corresponding to the transmission opportunity.

The access network device may indicate the MCS corresponding to the transmission opportunity to the terminal device in a plurality of manners. In a possible implementation, the access network device may send indication information 1 and indication information 2 to the terminal device. The indication information 1 may indicate a target MCS table, and the indication information 2 may indicate a target MCS in the target MCS table. For example, the indication information 2 includes an index value of the target MCS. Further, the terminal device selects the target MCS table from a plurality of MCS tables based on the indication information 1, and determines the target MCS from the target MCS table based on the indication information 2. The target MCS is the MCS corresponding to the transmission opportunity. The target MCS table may include a plurality of MCS indexes (for example, an MCS index 0 to an MCS index 27), and each MCS index may correspond to one modulation order and one target bit rate. For example, if a target MCS index value included in the indication information 2 is 18, the terminal device may determine that the target MCS is the MCS 18. For example, a modulation order corresponding to the MCS 18 is 4, a target bit rate corresponding to the MCS 18 is 490, and the MCS 18 may also be denoted as an MCS (4, 490).

MCSs corresponding to different transmission opportunities belonging to a same set of transmission opportunities are the same. In a possible implementation, for a set of transmission opportunities, if the access network device configures parameters such as a periodicity of the set of transmission opportunities by using an RRC message, and activates the set of transmission opportunities by using DCI, when the access network device indicates an MCS corresponding to the set of transmission opportunities to the terminal device by using the indication information 1 and the indication information 2, the indication information 1 may be carried in the RRC message, where for example, the indication information 1 may be carried in an sps-Config field corresponding to the set of transmission opportunities in the RRC message, and the indication information 2 may be carried in the DCI.

It can be learned from the foregoing descriptions of related technical features that different transmission opportunities in a same set of transmission opportunities have a same frequency domain width and a same time domain length (that is, quantities of resource elements (resource elements, REs) included in different transmission opportunities in the same set of transmission opportunities are the same), and MCSs corresponding to different transmission opportunities in the same set of transmission opportunities are the same. An amount of data that can be carried on a transmission opportunity may be determined based on a quantity of available REs included in the transmission opportunity and an MCS corresponding to the transmission opportunity. Therefore, assuming that all REs included in the transmission opportunity are available REs, maximum amounts of data that can be carried on different transmission opportunities in a same set of transmission opportunities are the same.

However, when a service includes different types of video frames, data amounts of different types of video frames are different, for example, a data amount of an I-frame is greater than a data amount of a P-frame. Consequently, there is a problem that an amount of data that can be carried on a transmission opportunity does not match a data amount of a video frame.

For example, the access network device configures a set of transmission opportunities for an XR service in the manner described in the foregoing configuration manner 1, and configures the transmission opportunity based on a data amount of an I-frame (for example, configures a time-frequency position of the transmission opportunity and an MCS corresponding to the transmission opportunity). That is, an amount of data that can be carried on the transmission opportunity matches the data amount of the I-frame, but does not match a data amount of a P-frame. As shown in a case a in FIG. 4, amounts of data that can be carried on a transmission opportunity 1 to a transmission opportunity 5 all match the data amount of the I-frame. The transmission opportunity 2, the transmission opportunity 3, and the transmission opportunity 4 are for transmitting the P-frame, and the data amount of the P-frame is less than the data amount of the I-frame. Consequently, this solution causes a resource waste on the transmission opportunity 2, the transmission opportunity 3, and the transmission opportunity 4.

That an amount of data that can be carried on a transmission opportunity matches a data amount of a video frame may mean that the amount of data that can be carried on the transmission opportunity is equal to the data amount of the video frame, or the amount of data that can be carried on the transmission opportunity is greater than the data amount of the video frame.

For another example, the access network device configures a set of transmission opportunities for an XR service in the manner described in the foregoing configuration manner 1, and configures the transmission opportunity based on a data amount of a P-frame (for example, configures a time-frequency position of the transmission opportunity and an MCS corresponding to the transmission opportunity). That is, an amount of data that can be carried on the transmission opportunity matches the data amount of the P-frame, but does not match a data amount of an I-frame. As shown in a case b in FIG. 4, amounts of data that can be carried on a transmission opportunity 1 to a transmission opportunity 5 all match the data amount of the P-frame. Consequently, transmission of data packets of the I-frame cannot be completed on the transmission opportunity 1 (or the transmission opportunity 5). In this case, transmission of the data packets of the I-frame needs to be continued on a next transmission opportunity (namely, the transmission opportunity 2) of the transmission opportunity 1. Consequently, transmission of all subsequent video frames is delayed, a transmission latency of the video frames is high, and user experience is affected.

For another example, the access network device configures a plurality of sets of transmission opportunities for an XR service in the manner described in the foregoing configuration manner 2. Although the access network device may configure different amounts of data that can be carried on the plurality of sets of transmission opportunities, when duration of one GOP and a periodicity of the transmission opportunity are different, an I-frame may be transmitted on different sets of transmission opportunities, and there is still the problem described above that an amount of data that can be carried on the transmission opportunity does not match a data amount of a video frame.

Based on this, in embodiments of this application, a related implementation of transmitting a video frame between the access network device and the terminal device in a semi-static scheduling manner is studied.

The following describes a communication method provided in embodiments of this application with reference to Embodiment 1 to Embodiment 4.

### Embodiment 1

In Embodiment 1, uplink transmission (where to be specific, a terminal device sends a video frame to an access network device in a semi-static scheduling manner) is used as an example for description.

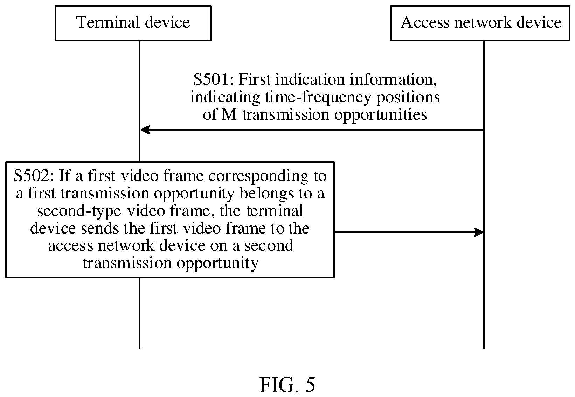

FIG. 5 is a schematic flowchart corresponding to a communication method according to an embodiment of this application. In FIG. 5, an example in which a terminal device and an access network device are used as execution entities of an interaction illustration is used for illustrating the method. However, this application does not limit the execution entities of the interaction illustration. For example, the terminal device in FIG. 5 may alternatively be a chip, a chip system, or a processor that supports the terminal device in implementing the method. The access network device in FIG. 5 may alternatively be a chip, a chip system, or a processor that supports the access network device in implementing the method, or may be a logical module or software that can implement all or some of functions of the access network device.

As shown in FIG. 5, the method includes the following steps.

S501: The access network device sends first indication information to the terminal device, where the first indication information indicates time-frequency positions of M transmission opportunities; and correspondingly, the terminal device may receive the first indication information.

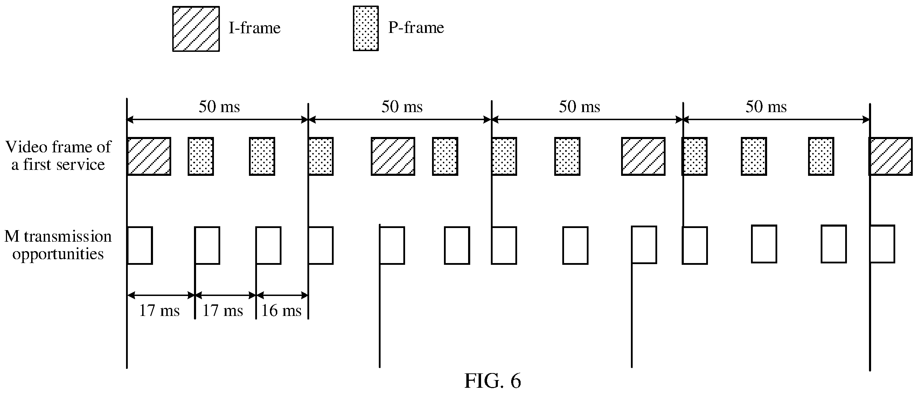

Herein, an amount of data that can be carried on each of the M transmission opportunities matches a data amount of a first-type video frame, and the data amount of the first-type video frame is less than a data amount of a second-type video frame. The M transmission opportunities may be in one-to-one correspondence with M video frames of a first service, and a transmission opportunity corresponding to a video frame may be for transmitting the video frame, as shown in FIG. 6. The M transmission opportunities include a first transmission opportunity, and the first transmission opportunity corresponds to a first video frame of the first service. The M video frames of the first service may include the first-type video frame and the second-type video frame. For example, the first service is an XR service, the first-type video frame is a P-frame, and the second-type video frame is an I-frame.

The first indication information may indicate the time-frequency positions of the M transmission opportunities in a plurality of manners. For example, when the M transmission opportunities may belong to one set of transmission opportunities, the access network device may configure the M transmission opportunities for the terminal device in the foregoing configuration manner 1 based on a transmission periodicity (for example, 16.67 ms) of the video frame of the first service. In this case, the first indication information may include related parameters in the configuration manner 1. For example, the first indication information may include periodicity parameters (for example, a reference periodicity and a periodicity increment), a parameter 1, and a parameter 2 of the M transmission opportunities. For the parameter 1 and the parameter 2, refer to the foregoing descriptions.

For another example, when the M transmission opportunities may belong to a plurality of sets of transmission opportunities, the access network device may alternatively configure the M transmission opportunities for the terminal device in the foregoing configuration manner 2 based on a transmission periodicity (for example, 16.67 ms) of the video frame of the first service. In this case, the first indication information may include related parameters in the configuration manner 2. For example, if the M transmission opportunities belong to three sets of transmission opportunities, the first indication information may include periodicity parameters of the three sets of transmission opportunities, and a parameter 1 and a parameter 2 corresponding to each of the three sets of transmission opportunities.

Optionally, before S501, the access network device may obtain service information of the first service, where the service information of the first service may include at least one of the following: the transmission periodicity of the video frame of the first service, a frame rate, a transmission periodicity of the second-type video frame, a quantity (that is, a value of K) of video frames included in one group of pictures of the first service, a ratio (which may be denoted as α) of the data amount of the second-type video frame to the data amount of the first-type video frame, and duration corresponding to one group of pictures.

The ratio of the data amount of the second-type video frame to the data amount of the first-type video frame may refer to a ratio of a data amount of any second-type video frame to a data amount of any first-type video frame of the first service; may refer to an average value of W1 ratios of W1 second-type video frames to W1 first-type video frames, where W1 is an integer greater than 1; or may refer to a ratio of an average value of data amounts of W2 second-type video frames to an average value of data amounts of W3 first-type video frames, where W2 and W3 are integers greater than 1, and W2 and W3 may be the same or different.

The access network device may obtain the service information of the first service in a plurality of manners. For example, the terminal device sends the service information of the first service to the access network device, or the access network device obtains the service information of the first service from a core network device.

S502: If the first video frame corresponding to the first transmission opportunity belongs to the second-type video frame, the terminal device sends the first video frame to the access network device on a second transmission opportunity; and correspondingly, the access network device receives the first video frame from the terminal device on the second transmission opportunity. An amount of data that can be carried on the second transmission opportunity matches the data amount of the second-type video frame.

Specifically, from a perspective of the terminal device, after determining that the first video frame belongs to the second-type video frame, the terminal device may determine the second transmission opportunity (for example, determine a time-frequency position of the second transmission opportunity and an MCS corresponding to the second transmission opportunity), and send a transport block to the access network device on the second transmission opportunity, where the transport block includes all data packets of the first video frame. From a perspective of the access network device, after determining that the first video frame belongs to the second-type video frame, the access network device may determine the second transmission opportunity (for example, determine the time-frequency position of the second transmission opportunity and the MCS corresponding to the second transmission opportunity), and receive the transport block from the terminal device on the second transmission opportunity.

The following uses the terminal device as an example for description.

### (1) Manner in which the terminal device determines that the first video frame belongs to the second-type video frame

The terminal device may determine, in a plurality of manners, that the first video frame belongs to the second-type video frame. The following describes three possible manners with reference to a manner 1 to a manner 3.

### (1.1) Manner 1

As described above, a 1^{st} video frame included in each group of pictures of the first service is the second-type video frame. Therefore, an (n*K+1)^{th} video frame of the first service is the second-type video frame. n is an integer greater than or equal to 0, and K is a quantity of video frames included in each group of pictures of the first service, or K is a total quantity of first-type video frames and second-type video frames included in the transmission periodicity of the second-type video frame.

The M transmission opportunities are in one-to-one correspondence with the M video frames of the first service. To be specific, a 1^{st} transmission opportunity in the M transmission opportunities corresponds to the 1^{st} video frame of the first service, a 2^{nd} transmission opportunity in the M transmission opportunities corresponds to a 2^{nd} video frame of the first service, and so on. The (n*K+1)^{th} video frame of the first service is the second-type video frame. Therefore, if the terminal device determines that the first transmission opportunity is an (n*K+1)^{th} transmission opportunity in the M transmission opportunities, the terminal device may determine that the first video frame corresponding to the first transmission opportunity belongs to the second-type video frame.

### (1.2) Manner 2

The M transmission opportunities may further include a third transmission opportunity before the first transmission opportunity, the third transmission opportunity corresponds to a second video frame, and the second video frame belongs to the second-type video frame.

In a possible implementation, if the terminal device determines that a time interval between a time domain start position of the first transmission opportunity and a time domain start position of the third transmission opportunity is equal to first duration, where the first duration is equal to the transmission periodicity of the second-type video frame (or duration corresponding to one group of pictures), the terminal device may determine that the first video frame belongs to the second-type video frame.

Based on this implementation, in an example, the terminal device may maintain a timer, and duration of the timer is the first duration. The terminal device may determine that a video frame corresponding to a 1^{st} transmission opportunity (for example, a 1^{st} transmission opportunity after the terminal device receives an activation command) in the M transmission opportunities belongs to the second-type video frame, and start the timer on a 1^{st} symbol of the transmission opportunity. For each subsequent transmission opportunity, if the timer is running on a 1^{st} symbol of the transmission opportunity, the terminal device may determine that a video frame corresponding to the transmission opportunity belongs to the first-type video frame. If the timer expires on the 1^{st} symbol of the transmission opportunity, the terminal device may determine that the video frame corresponding to the transmission opportunity belongs to the second-type video frame, and restart the timer on the 1^{st} symbol of the transmission opportunity.

In another possible implementation, if the terminal device determines that there are K-1 transmission opportunities between the first transmission opportunity and the third transmission opportunity (in other words, there are K-1 video frames between the first video frame and the second video frame), the terminal device may determine that the first video frame belongs to the second-type video frame.

Based on this implementation, in an example, the terminal device may maintain a counter, and the terminal device may start counting from the 1^{st} transmission opportunity in the M transmission opportunities (where a count value is 1). When the count value is K, the terminal device may clear the count value, and restart counting for a next transmission opportunity. In this way, the terminal device may determine that a video frame corresponding to a transmission opportunity whose count value is 1 belongs to the second-type video frame.

### (1.3) Manner 3

The first video frame may include a type identifier, and the type identifier indicates that the first video frame belongs to the second-type video frame. Further, the terminal device may determine, based on the type identifier carried in the first video frame, that the first video frame belongs to the second-type video frame.

In a possible implementation, type identifiers may include a type identifier 1 and a type identifier 2, the type identifier 1 indicates the first-type video frame, and the type identifier 2 indicates the second-type video frame. Each video frame of the first service may carry a type identifier, the first-type video frame carries the type identifier 1, and the second-type video frame carries the type identifier 2. Further, the terminal device may determine, based on the type identifier carried in each video frame, a type to which the video frame belongs.

In another possible implementation, a type identifier indicates the second-type video frame. The second-type video frame of the first service carries a type identifier, and the first-type video frame does not carry a type identifier. Further, if a video frame carries a type identifier, the terminal device may determine that the video frame belongs to the second-type video frame.

In another possible implementation, a type identifier indicates the first-type video frame. The first-type video frame of the first service carries a type identifier, and the second-type video frame does not carry a type identifier. Further, if a video frame does not carry a type identifier, the terminal device may determine that the video frame belongs to the second-type video frame.

For example, a type identifier may be carried in a 1^{st} data packet of a video frame, so that it is convenient for the terminal device to determine a type of the video frame as early as possible.

In a specific implementation, the terminal device may determine a type of a video frame in at least one of the foregoing manner 1, manner 2, and manner 3. For example, the terminal device may determine a type of a video frame in the manner 1 and the manner 3. Generally, a determining result in the manner 1 is consistent with a determining result in the manner 3. If the determining result in the manner 1 conflicts with the determining result in the manner 3, the terminal device may use the determining result in the manner 3, and use an I-frame determined in the manner 3 as a 1^{st} video frame in a new GOP.

It may be understood that, from a perspective of the access network device, the access network device may also determine a type of a video frame in at least one of the foregoing manner 1, manner 2, and manner 3. For example, the access network device may determine, in a same manner as the terminal device, that the first video frame belongs to the second-type video frame. For example, a to-be-used manner may be predefined in a protocol, or the access network device may indicate a to-be-used manner to the terminal device. A specific indication manner is not limited. For example, the access network device may perform indication by using an RRC message, a media access control (media access control, MAC) control element (control element, CE), or DCI.

### (2) Manner in which the terminal device determines the second transmission opportunity

That the terminal device determines the second transmission opportunity may mean that the terminal device determines the time-frequency position of the second transmission opportunity and the MCS corresponding to the second transmission opportunity. There may be a plurality of specific manners. The following describes several possible manners with reference to a case 1 and a case 2.

### (2.1) Case 1

In the case 1, the MCS corresponding to the second transmission opportunity is the same as an MCS corresponding to the first transmission opportunity. For example, it may be predefined in a protocol that the MCS corresponding to the second transmission opportunity is the same as the MCS corresponding to the first transmission opportunity, or the access network device may indicate, to the terminal device, that the MCS corresponding to the second transmission opportunity is the same as the MCS corresponding to the first transmission opportunity. Further, after the access network device indicates the MCS corresponding to the first transmission opportunity to the terminal device, the terminal device may obtain the MCS corresponding to the second transmission opportunity based on the MCS corresponding to the first transmission opportunity. For another example, the access network device may separately indicate the MCS corresponding to the first transmission opportunity and the MCS corresponding to the second transmission opportunity to the terminal device, and the separately indicated MCSs are the same. For a specific implementation in which the access network device indicates, to the terminal device, an MCS corresponding to a transmission opportunity, refer to the foregoing descriptions.

Based on this case, the terminal device may determine the time-frequency position of the second transmission opportunity in the following two possible manners.

### (2.1.1) Manner 1

The terminal device may determine the time-frequency position of the second transmission opportunity based on a time-frequency position of the first transmission opportunity, the data amount of the first-type video frame, and the data amount of the second-type video frame. For example, the terminal device may extend the first transmission opportunity in time domain and/or frequency domain based on the ratio of the data amount of the second-type video frame to the data amount of the first-type video frame, to obtain the second transmission opportunity. There may be a plurality of specific extension rules, for example, the following extension rule 1 to extension rule 3.

**Extension rule 1:** The terminal device may extend (for example, prolong backward) a time domain length of the first transmission opportunity based on the ratio, to obtain the second transmission opportunity. The terminal device may send one transport block on the second transmission opportunity, and the transport block includes all data packets of the first video frame.

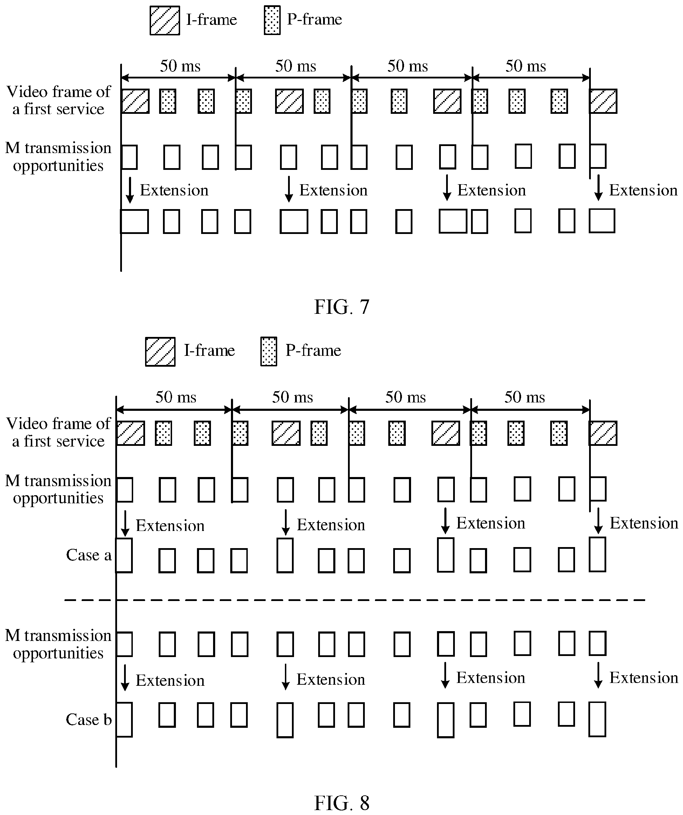

In this case, refer to FIG. 7. The first transmission opportunity and the second transmission opportunity completely overlap in frequency domain. The time domain start position of the first transmission opportunity is the same as a time domain start position of the second transmission opportunity, and a time domain length of the second transmission opportunity is greater than the time domain length of the first transmission opportunity. For example, if the first transmission opportunity includes T1 time units in time domain, and the second transmission opportunity includes T2 time units in time domain, T2=ceil[(α)•T1], or T2=ceil(α)•T1, ceil represents rounding up, α represents the ratio of the data amount of the second-type video frame to the data amount of the first-type video frame, and both T1 and T2 are positive integers.

**Extension rule 2:** The terminal device may extend a frequency domain width of the first transmission opportunity based on the ratio, to obtain the second transmission opportunity. The terminal device may send one transport block on the second transmission opportunity, and the transport block includes all data packets of the first video frame.

In this case, refer to a case a in FIG. 8. The first transmission opportunity and the second transmission opportunity completely overlap in time domain, frequency domain start positions of the first transmission opportunity and the second transmission opportunity are the same, and a frequency domain width of the second transmission opportunity is greater than the frequency domain width of the first transmission opportunity. Alternatively, refer to a case b in FIG. 8. The first transmission opportunity and the second transmission opportunity completely overlap in time domain, frequency domain end positions of the first transmission opportunity and the second transmission opportunity are the same, and a frequency domain width of the second transmission opportunity is greater than the frequency domain width of the first transmission opportunity.

For example, if the first transmission opportunity includes P1 resource blocks RBs in frequency domain, and the second transmission opportunity includes P2 RBs in frequency domain, P2=ceil[(α)•P1], or P2=ceil(α)•P1, where both P1 and P2 are positive integers. (a) in FIG. 8 may also be understood as modifying a frequency domain end position of the first transmission opportunity. For example, P2=ceil(α)•P1. This is equivalent to modifying the frequency domain end position of the first transmission opportunity from RBₛₜₐᵣₜ+P1 to RBₛₜₐᵣₜ+ceil(α)•P1. (b) in FIG. 8 may also be understood as modifying the frequency domain start position of the first transmission opportunity. For example, P2=ceil(α)•P1. This is equivalent to modifying the frequency domain start position of the first transmission opportunity from REₛₜₐᵣₜ to RBₛₜₐᵣₜ-(ceil(α)-1)•P1.

It may be understood that the foregoing listed three extension rules are merely examples, and there may be another possible extension rule, for example, an extension rule 3: The terminal device extends both the time domain length and the frequency domain width of the first transmission opportunity based on the ratio, to obtain the second transmission opportunity.

In addition, from a perspective of the access network device, the access network device may also determine the time-frequency position of the second transmission opportunity in the foregoing manner 1. An extension rule used when the access network device determines the time-frequency position of the second transmission opportunity may be the same as an extension rule used by the terminal device. For example, a to-be-used extension rule may be predefined in a protocol, or the access network device may indicate a to-be-used extension rule to the terminal device. A specific indication manner is not limited. For example, the access network device may perform indication by using an RRC message, a MAC CE, or DCI.

In the manner 1 in the case 1, the terminal device may extend the time domain length and/or a frequency domain length of the first transmission opportunity to obtain the second transmission opportunity, and send the second-type video frame on the second transmission opportunity. Therefore, in comparison with the case a in FIG. 4, a resource waste problem can be effectively avoided. In addition, in comparison with the case b in FIG. 4 (to be specific, a video frame corresponding to the transmission opportunity 1 is an I-frame, and because an amount of data that can be carried on the transmission opportunity 1 is less than a data amount of the I-frame, a data packet that is not completely sent on the transmission opportunity 1 needs to be delayed to be sent on the transmission opportunity 2), the second transmission opportunity obtained through extension is before a next transmission opportunity of the first transmission opportunity in the M transmission opportunities (in other words, a time domain end position of the second transmission opportunity is before a time domain start position of the next transmission opportunity). For example, the first transmission opportunity is the transmission opportunity 1 in the case b in FIG. 4. In this case, the second transmission opportunity is before the transmission opportunity 2. In other words, the terminal device may completely send data packets of the I-frame on the second transmission opportunity, and the data packet of the I-frame does not need to be delayed to be sent on the transmission opportunity 2, so that a transmission latency of a video frame can be effectively reduced.

### (2.1.2) Manner 2

The access network device may send second indication information to the terminal device, where the second indication information indicates time-frequency positions of N transmission opportunities, an amount of data that can be carried on each of the N transmission opportunities matches the data amount of the second-type video frame, the N transmission opportunities include the second transmission opportunity, and N is a positive integer.

The N transmission opportunities may be in one-to-one correspondence with the second-type video frame of the first service. The N transmission opportunities may belong to one set of transmission opportunities. For example, the access network device may configure the N transmission opportunities for the terminal device in the foregoing configuration manner 1 based on the transmission periodicity (for example, 66.68 ms) of the second-type video frame of the first service. Alternatively, the N transmission opportunities may belong to a plurality of sets of transmission opportunities. For example, the access network device may configure the N transmission opportunities for the terminal device in the foregoing configuration manner 2 based on the transmission periodicity (for example, 66.68 ms) of the second-type video frame of the first service. Because the (n*K+1)^{th} video frame of the first service is the second-type video frame, an (n+1)^{th} transmission opportunity in the N transmission opportunities may correspond to the (n*K+1)^{th} video frame of the first service.

For example, the (n+1)^{th} transmission opportunity in the N transmission opportunities and the (n*K+1)^{th} transmission opportunity in the M transmission opportunities may satisfy the following condition 1 or condition 2.

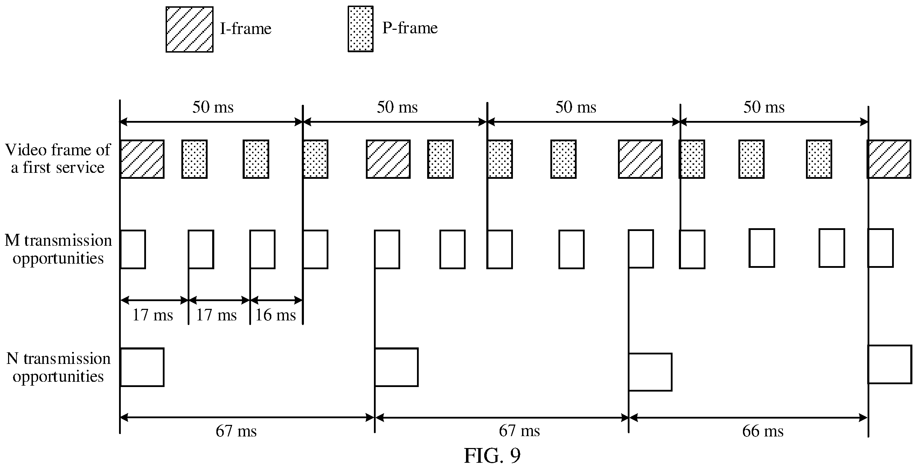

Condition 1: The (n+1)^{th} transmission opportunity and the (n*K+1)^{th} transmission opportunity completely overlap in frequency domain, time domain start positions of the (n+1)^{th} transmission opportunity and the (n*K+1)^{th} transmission opportunity are the same, and a time domain length of the (n+1)^{th} transmission opportunity is greater than a time domain length of the (n*K+1)^{th} transmission opportunity, as shown in FIG. 9. For example, the (n*K+1)^{th} transmission opportunity includes T1 time units in time domain, and the (n+1)^{th} transmission opportunity includes T2 time units in time domain. For a relationship between T1 and T2, refer to the foregoing descriptions.

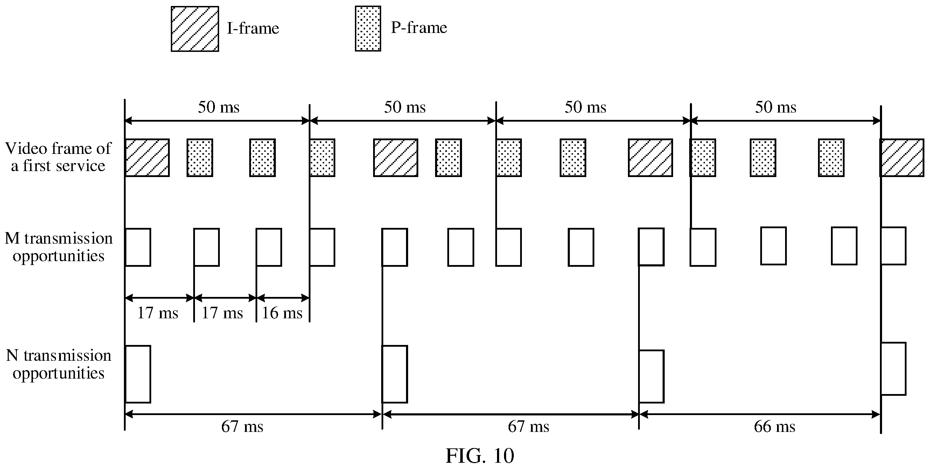

Condition 2: The (n+1)^{th} transmission opportunity and the (n*K+1)^{th} transmission opportunity completely overlap in time domain, frequency domain start positions of the (n+1)^{th} transmission opportunity and the (n*K+1)^{th} transmission opportunity are the same (or frequency domain end positions of the (n+1)^{th} transmission opportunity and the (n*K+1)^{th} transmission opportunity are the same), and a frequency domain width of the (n+1)^{th} transmission opportunity is greater than a frequency domain width of the (n*K+1)^{th} transmission opportunity, as shown in FIG. 10. For example, the (n*K+1)^{th} transmission opportunity includes P1 resource blocks RBs in frequency domain, and the (n+1)^{th} transmission opportunity includes P2 RBs in frequency domain. For a relationship between P1 and P2, refer to the foregoing descriptions.

When the terminal device determines that the first video frame corresponding to the first transmission opportunity belongs to the second-type video frame (that is, the first video frame is the (n*K+1)^{th} video frame of the first service), the terminal device may determine that the (n+1)^{th} transmission opportunity in the N transmission opportunities is the second transmission opportunity, and send the first video frame on the second transmission opportunity.

In addition, from a perspective of the access network device, when the access network device determines that the first video frame corresponding to the first transmission opportunity belongs to the second-type video frame, the access network device may determine that the (n+1)^{th} transmission opportunity in the N transmission opportunities is the second transmission opportunity, and receive the first video frame on the second transmission opportunity.

In the manner 2 in the case 1, the N transmission opportunities are indicated by the access network device to the terminal device, so that it is convenient to reduce processing load of the terminal device. Further, the (n+1)^{th} transmission opportunity in the N transmission opportunities and the (n*K+1)^{th} transmission opportunity in the M transmission opportunities satisfy the condition 1 or the condition 2. Therefore, in comparison with the case a in FIG. 4, a resource waste problem can be effectively avoided. In addition, in comparison with the case b in FIG. 4, a transmission latency of a video frame can be effectively reduced. Herein, refer to the foregoing descriptions of the manner 1 in the case 1.

### (2.2) Case 2

In the case 2, the time-frequency position of the second transmission opportunity is the same as the time-frequency position of the first transmission opportunity. For example, it may be predefined in a protocol that the time-frequency position of the second transmission opportunity is the same as the time-frequency position of the first transmission opportunity, or the access network device may indicate, to the terminal device, that the time-frequency position of the second transmission opportunity is the same as the time-frequency position of the first transmission opportunity. Further, after the access network device indicates the time-frequency position of the first transmission opportunity to the terminal device, the terminal device may obtain the time-frequency position of the second transmission opportunity based on the time-frequency position of the first transmission opportunity.

Based on this case, the terminal device may determine the MCS corresponding to the second transmission opportunity in the following two possible manners, and then the terminal device may send a video frame to the access network device on the second transmission opportunity based on the time-frequency position of the second transmission opportunity and the MCS corresponding to the second transmission opportunity.

### (2.2.1) Manner 1

The terminal device may determine the MCS corresponding to the second transmission opportunity based on the MCS corresponding to the first transmission opportunity. For example, the terminal device may determine the MCS corresponding to the second transmission opportunity based on the MCS corresponding to the first transmission opportunity and the ratio of the data amount of the second-type video frame to the data amount of the first-type video frame.

For example, the terminal device may query a table of an association relationship between the ratio and an MCS index value offset based on the ratio, to obtain an MCS index value offset associated with the ratio, and further obtain the MCS corresponding to the second transmission opportunity based on the MCS corresponding to the first transmission opportunity and the MCS index value offset associated with the ratio. An MCS index value corresponding to the second transmission opportunity is equal to an MCS index value corresponding to the first transmission opportunity plus the MCS index value offset associated with the ratio. The table of the association relationship between the ratio and the MCS index value offset may be predefined in a protocol, or may be indicated by the access network device to the terminal device. This is not specifically limited.

In addition, from a perspective of the access network device, the access network device may also determine the MCS corresponding to the second transmission opportunity in the manner 1.

### (2.2.2) Manner 2

The access network device may send third indication information to the terminal device, where the third indication information indicates the MCS corresponding to the second transmission opportunity, or an offset between the MCS corresponding to the second transmission opportunity and the MCS corresponding to the first transmission opportunity. Further, the terminal device may determine the MCS corresponding to the second transmission opportunity based on the third indication information. For example, the access network device may determine the MCS corresponding to the second transmission opportunity in the foregoing manner 1, and indicate the MCS to the terminal device by using the third indication information. For another example, the access network device may query a table of an association relationship between the ratio and an MCS index value offset based on the ratio, to obtain an MCS index value offset (namely, the offset between the MCS corresponding to the second transmission opportunity and the MCS corresponding to the first transmission opportunity) associated with the ratio, and indicate the MCS index value offset to the terminal device by using the third indication information.

In the manner 1 or the manner 2 in the case 2, time-frequency positions of the first transmission opportunity and the second transmission opportunity are the same. Therefore, in comparison with the case a in FIG. 4, a resource waste problem can be effectively avoided, and in comparison with the case b in FIG. 4, a transmission latency of a video frame can be effectively reduced.

It may be understood that, in another possible embodiment, if a video frame corresponding to the first transmission opportunity belongs to the first-type video frame, the terminal device may send the first video frame to the access network device on the first transmission opportunity; and correspondingly, the access network device receives the first video frame from the terminal device on the first transmission opportunity.

According to the method in Embodiment 1, after the access network device indicates the M transmission opportunities to the terminal device, if the amount of data that can be carried on each of the M transmission opportunities matches the data amount of the first-type video frame, when the first video frame corresponding to the first transmission opportunity in the M transmission opportunities belongs to the second-type video frame, the terminal device may send the first video frame to the access network device on the second transmission opportunity, where the amount of data that can be carried on the second transmission opportunity matches the data amount of the second-type video frame. In this way, a problem that an amount of data that can be carried on a transmission opportunity does not match a data amount of a video frame can be effectively resolved, and the access network device and the terminal device can transmit a video frame in a semi-static scheduling manner.

### Embodiment 2

A difference between Embodiment 2 and Embodiment 1 lies in that Embodiment 1 is for uplink transmission, and Embodiment 2 is for downlink transmission.

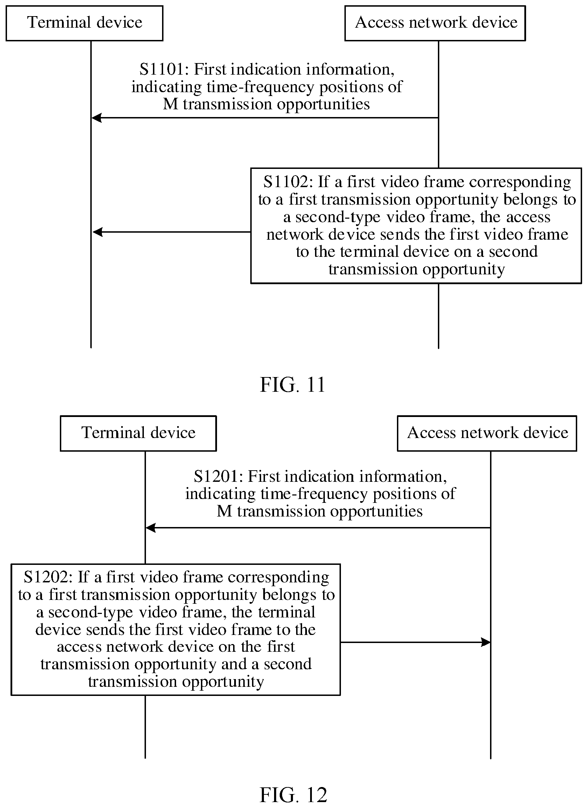

FIG. 11 is a schematic flowchart corresponding to a communication method according to Embodiment 2 of this application. In FIG. 11, an example in which a terminal device and an access network device are used as execution entities of an interaction illustration is used for illustrating the method. However, this application does not limit the execution entities of the interaction illustration. For example, the terminal device in FIG. 11 may alternatively be a chip, a chip system, or a processor that supports the terminal device in implementing the method. The access network device in FIG. 11 may alternatively be a chip, a chip system, or a processor that supports the access network device in implementing the method, or may be a logical module or software that can implement all or some of functions of the access network device.

As shown in FIG. 11, the method includes the following steps.

S1101: The access network device sends first indication information to the terminal device, where the first indication information indicates time-frequency positions of M transmission opportunities; and correspondingly, the terminal device may receive the first indication information.

Herein, for S1101, refer to the descriptions of S501 in Embodiment 1.

Optionally, the access network device may send service information of a first service to the terminal device, where the service information of the first service may include at least one of the following: a transmission periodicity (for example, 16.67 ms) of a video frame of the first service, a quantity (namely, a value of K) of video frames included in one group of pictures of the first service, a ratio (which may be denoted as α) of a data amount of a second-type video frame to a data amount of a first-type video frame, and duration corresponding to one group of pictures. The access network device may obtain the service information of the first service in a plurality of manners. For example, the access network device may obtain the service information of the first service from an XR application server.

The access network device may send the service information of the first service to the terminal device in a plurality of manners. The following describes several possible manners by using an example in which the access network device sends the ratio α to the terminal device.

### (1) Manner 1

The access network device may send an RRC message to the terminal device, where the RRC message includes the ratio α.

For example, when the M transmission opportunities belong to one set of transmission opportunities, the ratio α may be carried in an SPS-Config field corresponding to the set of transmission opportunities in the RRC message.

For another example, when the M transmission opportunities belong to a plurality of sets of transmission opportunities (for example, three sets of transmission opportunities), a 1^{st} set of transmission opportunities in the three sets of transmission opportunities corresponds to an SPS-Config field 1, a 2^{nd} set of transmission opportunities corresponds to an SPS-Config field 2, and a 3^{rd} set of transmission opportunities corresponds to an SPS-Config field 3. In this case, in a possible implementation, the ratio α may be carried in each of the SPS-Config field 1, the SPS-Config field 2, and the SPS-Config field 3 (that is, each SPS-Config field 1 includes the ratio α), or may be carried in one or two of the SPS-Config field 1, the SPS-Config field 2, and the SPS-Config field 3.

In another possible implementation, a new field, for example, an sps-Config-XR field, may be defined in the RRC message. The sps-Config-XR field may include the ratio α and an SPS-Config field list, and the SPS-Config field list includes the SPS-Config field 1, the SPS-Config field 2, and the SPS-Config field 3.

### (2) Manner 2

The access network device may send DCI to the terminal device, where the DCI includes the ratio α.

For example, when the M transmission opportunities belong to one set of transmission opportunities, the access network device may send DCI-1 to the terminal device, where the DCI-1 is for activating the M transmission opportunities, and the DCI-1 includes the ratio α.

For another example, when the M transmission opportunities belong to a plurality of sets of transmission opportunities (for example, three sets of transmission opportunities), the access network device may send DCI-1, DCI-2, and DCI-3 to the terminal device, where DCI-1 is for activating a 1^{st} set of transmission opportunities in the three sets of transmission opportunities, the DCI-2 is for activating a 2^{nd} set of transmission opportunities in the three sets of transmission opportunities, and the DCI-3 is for activating a 3^{rd} set of transmission opportunities in the three sets of transmission opportunities. The ratio α may be carried in each of the DCI-1, the DCI-2, and the DCI-3 (that is, each DCI includes the ratio α), or may be carried in one or two of the DCI-1, the DCI-2, and the DCI-3.

For another example, the access network device may send new DCI to the terminal device, where the DCI includes the ratio α. The DCI is different from DCI for activating the M transmission opportunities. For example, the DCI may satisfy at least one of the following: The DCI is scrambled by using a radio network temporary identifier (radio network temporary identifier, RNTI) different from a CS-RNTI; search space corresponding to the DCI is different from search space corresponding to the DCI for activating the M transmission opportunities; and a format of the DCI is different from a format of the DCI for activating the M transmission opportunities (for example, the format of the DCI is a newly defined format).

It may be understood that, for a manner in which the access network device sends other service information to the terminal device, refer to the implementation in which the access network device sends the ratio α to the terminal device. Details are not described again. The service information sent by the access network device to the terminal device may be carried in a same message, or may be carried in different messages.

S1102: If a first video frame corresponding to a first transmission opportunity belongs to the second-type video frame, the access network device sends the first video frame to the terminal device on a second transmission opportunity; and correspondingly, the terminal device receives the first video frame from the access network device on the second transmission opportunity. An amount of data that can be carried on the second transmission opportunity matches the data amount of the second-type video frame.

Herein, for S1102, refer to the descriptions of S502 in Embodiment 1.

According to the method in Embodiment 2, after the access network device indicates the M transmission opportunities to the terminal device, if an amount of data that can be carried on each of the M transmission opportunities matches the data amount of the first-type video frame, when the first video frame corresponding to the first transmission opportunity in the M transmission opportunities belongs to the second-type video frame, the access network device may send the first video frame to the terminal device on the second transmission opportunity, where the amount of data that can be carried on the second transmission opportunity matches the data amount of the second-type video frame. In this way, a problem that an amount of data that can be carried on a transmission opportunity does not match a data amount of a video frame can be effectively resolved, and the access network device and the terminal device can transmit a video frame in a semi-static scheduling manner.

### Embodiment 3

In Embodiment 3, uplink transmission is used as an example for description.

FIG. 12 is a schematic flowchart corresponding to a communication method according to Embodiment 3 of this application. In FIG. 12, an example in which a terminal device and an access network device are used as execution entities of an interaction illustration is used for illustrating the method. However, this application does not limit the execution entities of the interaction illustration. For example, the terminal device in FIG. 12 may alternatively be a chip, a chip system, or a processor that supports the terminal device in implementing the method. The access network device in FIG. 12 may alternatively be a chip, a chip system, or a processor that supports the access network device in implementing the method, or may be a logical module or software that can implement all or some of functions of the access network device.

As shown in FIG. 12, the method includes the following steps.

S1201: The access network device sends first indication information to the terminal device, where the first indication information indicates time-frequency positions of M transmission opportunities; and correspondingly, the terminal device may receive the first indication information.

Herein, for S1201, refer to the descriptions of S501 in Embodiment 1.

S1202: If a first video frame corresponding to a first transmission opportunity belongs to a second-type video frame, the terminal device sends the first video frame to the access network device on the first transmission opportunity and a second transmission opportunity; and correspondingly, the access network device receives the first video frame from the terminal device on the first transmission opportunity and the second transmission opportunity. A total amount of data that can be carried on the first transmission opportunity and the second transmission opportunity matches a data amount of the second-type video frame.

Specifically, from a perspective of the terminal device, after determining that the first video frame belongs to the second-type video frame, the terminal device may determine the second transmission opportunity (for example, determine a time-frequency position of the second transmission opportunity and an MCS corresponding to the second transmission opportunity), send a transport block 1 to the access network device on the first transmission opportunity, where the transport block 1 includes some data packets of the first video frame, and send a transport block 2 to the access network device on the second transmission opportunity, where the transport block 2 includes the other data packets of the first video frame. From a perspective of the access network device, after determining that the first video frame belongs to the second-type video frame, the access network device may determine the second transmission opportunity (for example, determine the time-frequency position of the second transmission opportunity and the MCS corresponding to the second transmission opportunity), receive the transport block 1 on the first transmission opportunity, and receive the transport block 2 on the second transmission opportunity.

For example, for a manner in which the terminal device and the access network device determine that the first video frame belongs to the second-type video frame, refer to Embodiment 1.

The following describes a manner in which the terminal device determines the second transmission opportunity by using the terminal device as an example. That the terminal device determines the second transmission opportunity may mean that the terminal device determines the time-frequency position of the second transmission opportunity and the MCS corresponding to the second transmission opportunity.

The MCS corresponding to the second transmission opportunity is the same as an MCS corresponding to the first transmission opportunity. For example, it may be predefined in a protocol that the MCS corresponding to the second transmission opportunity is the same as the MCS corresponding to the first transmission opportunity, or the access network device may indicate, to the terminal device, that the MCS corresponding to the second transmission opportunity is the same as the MCS corresponding to the first transmission opportunity. Further, after the access network device indicates the MCS corresponding to the first transmission opportunity to the terminal device, the terminal device may obtain the MCS corresponding to the second transmission opportunity based on the MCS corresponding to the first transmission opportunity. For another example, the access network device may separately indicate the MCS corresponding to the first transmission opportunity and the MCS corresponding to the second transmission opportunity to the terminal device, and the separately indicated MCSs are the same.

In this case, the terminal device may determine the time-frequency position of the second transmission opportunity in the following manner 1 and manner 2.

### (1) Manner 1

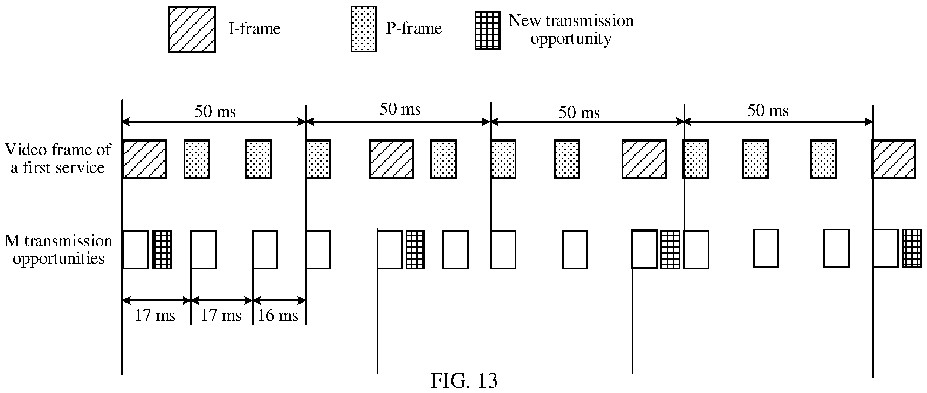

The terminal device may determine the time-frequency position of the second transmission opportunity based on a time-frequency position of the first transmission opportunity, a data amount of a first-type video frame, and the data amount of the second-type video frame. For example, the terminal device may add, based on a ratio of the data amount of the second-type video frame to the data amount of the first-type video frame, a new transmission opportunity (namely, the second transmission opportunity) to a periodicity of the first transmission opportunity. In other words, the second transmission opportunity is before a next transmission opportunity of the first transmission opportunity in the M transmission opportunities. Refer to FIG. 13. The second transmission opportunity and the first transmission opportunity overlap in frequency domain, and a time domain start position of the second transmission opportunity may be after a time domain end position of the first transmission opportunity (that is, the first transmission opportunity and the second transmission opportunity are not consecutive in time domain). The second transmission opportunity includes T3 time units in time domain, where T3=ceil[(α)•T1]-T1 or T3=ceil(α)•T1-T1.

It may be understood that, in another possible embodiment, the time domain start position of the second transmission opportunity may be the same as the time domain end position of the first transmission opportunity (that is, the first transmission opportunity and the second transmission opportunity are consecutive in time domain). In this case, the terminal device may send one transport block on the first transmission opportunity and the second transmission opportunity, where the transport block includes all data packets of the first video frame. For details, refer to the descriptions in Embodiment 1.

In another possible embodiment, the terminal device may alternatively add ceil(α)-1 second transmission opportunities to a periodicity of the first transmission opportunity, and a time domain length of each second transmission opportunity is the same as a length of the first transmission opportunity, so that the terminal device may send the first video frame on the first transmission opportunity and at least one second transmission opportunity. For details, refer to descriptions of adding one second transmission opportunity. Details are not described again.

In the foregoing manner 1, the terminal device adds the new transmission opportunity (namely, the second transmission opportunity) to the periodicity of the first transmission opportunity. In other words, the second transmission opportunity is before the next transmission opportunity of the first transmission opportunity in the M transmission opportunities. Therefore, in comparison with the case a in FIG. 4, a resource waste problem can be effectively avoided, and in comparison with the case b in FIG. 4, a transmission latency of a video frame can be effectively reduced.

### (2) Manner 2

The access network device may send second indication information to the terminal device, where the second indication information indicates time-frequency positions of N transmission opportunities, the N transmission opportunities include the second transmission opportunity, and N is a positive integer.

The N transmission opportunities may be in one-to-one correspondence with a second-type video frame of a first service. The N transmission opportunities may belong to one set of transmission opportunities. For example, the access network device may configure the N transmission opportunities for the terminal device in the foregoing configuration manner 1 based on a transmission periodicity (for example, 66.68 ms) of the second-type video frame of the first service. Alternatively, the N transmission opportunities may belong to a plurality of sets of transmission opportunities. For example, the access network device may configure the N transmission opportunities for the terminal device in the foregoing configuration manner 2 based on a transmission periodicity (for example, 66.68 ms) of the second-type video frame of the first service. Because an (n*K+1)^{th} video frame of the first service is the second-type video frame, an (n+1)^{th} transmission opportunity in the N transmission opportunities may correspond to the (n*K+1)^{th} video frame of the first service.

For example, the (n+1)^{th} transmission opportunity in the N transmission opportunities and an (n*K+1)^{th} transmission opportunity in the M transmission opportunities may satisfy the following condition 1 or condition 2.

Condition 1: Frequency domain widths of the (n+1)^{th} transmission opportunity and the (n*K+1)^{th} transmission opportunity are the same, the (n*K+1)^{th} transmission opportunity includes T1 time units in time domain, and the (n+1)^{th} transmission opportunity includes T3 time units in time domain. For a relationship between T3 and T1, refer to the foregoing descriptions.

The (n+1)^{th} transmission opportunity and the (n*K+1)^{th} transmission opportunity may completely overlap in frequency domain, that is, frequency domain start positions of the (n+1)^{th} transmission opportunity and the (n*K+1)^{th} transmission opportunity are the same, or frequency domain end positions of the (n+1)^{th} transmission opportunity and the (n*K+1)^{th} transmission opportunity are the same. Alternatively, the (n+1)^{th} transmission opportunity and the (n*K+1)^{th} transmission opportunity may be consecutive in frequency domain, that is, a frequency domain start position of the (n+1)^{th} transmission opportunity is the same as a frequency domain end position of the (n*K+1)^{th} transmission opportunity, or a frequency domain end position of the (n+1)^{th} transmission opportunity is the same as a frequency domain start position of the (n*K+1)^{th} transmission opportunity. Alternatively, the (n+1)^{th} transmission opportunity and the (n*K+1)^{th} transmission opportunity may not be consecutive in frequency domain.

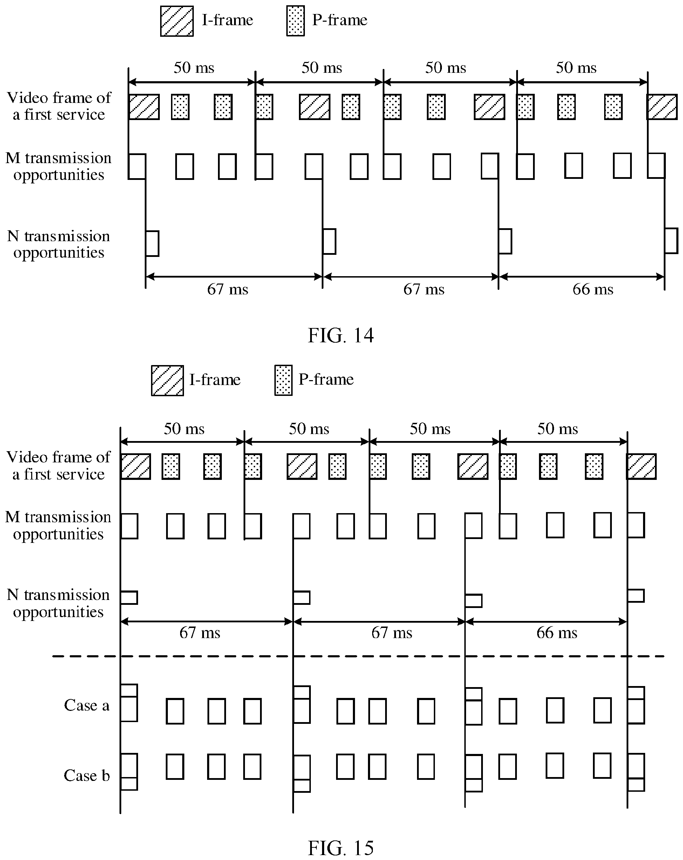

The (n+1)^{th} transmission opportunity and the (n*K+1)^{th} transmission opportunity may be consecutive in time domain. For example, a time domain start position of the (n+1)^{th} transmission opportunity may be the same as a time domain end position of the (n*K+1)^{th} transmission opportunity, as shown in FIG. 14. Alternatively, the (n+1)^{th} transmission opportunity and the (n*K+1)^{th} transmission opportunity may not be consecutive in time domain. For example, the time domain start position of the (n+1)^{th} transmission opportunity is after a time domain end position of the (n*K+1)^{th} transmission opportunity.

It may be understood that, when the (n+1)^{th} transmission opportunity and the (n*K+1)^{th} transmission opportunity may completely overlap in frequency domain, and the (n+1)^{th} transmission opportunity and the (n*K+1)^{th} transmission opportunity may be consecutive in time domain, the terminal device may send one transport block on the first transmission opportunity and the second transmission opportunity, where the transport block includes all data packets of the first video frame.

Condition 2: Time domain lengths of the (n+1)^{th} transmission opportunity and the (n*K+1)^{th} transmission opportunity are the same, the (n*K+1)^{th} transmission opportunity includes P1 resource blocks RBs in frequency domain, and the (n+1)^{th} transmission opportunity includes P3 RBs in frequency domain, where P3=ceil[(α)•P1]-P1 or P3=[ceil(α)-1]•P1.

The (n+1)^{th} transmission opportunity and the (n*K+1)^{th} transmission opportunity may completely overlap in time domain, that is, time domain start positions of the (n+1)^{th} transmission opportunity and the (n*K+1)^{th} transmission opportunity are the same, or time domain end positions of the (n+1)^{th} transmission opportunity and the (n*K+1)^{th} transmission opportunity are the same, as shown in FIG. 15. Alternatively, the (n+1)^{th} transmission opportunity and the (n*K+1)^{th} transmission opportunity may be consecutive in time domain. For example, a time domain start position of the (n+1)^{th} transmission opportunity is the same as a time domain end position of the (n*K+1)^{th} transmission opportunity. Alternatively, the (n+1)^{th} transmission opportunity and the (n*K+1)^{th} transmission opportunity may not be consecutive in time domain. For example, a time domain start position of the (n+1)^{th} transmission opportunity is after a time domain end position of the (n*K+1)^{th} transmission opportunity.

The (n+1)^{th} transmission opportunity and the (n*K+1)^{th} transmission opportunity may be consecutive in frequency domain. For example, a frequency domain start position of the (n+1)^{th} transmission opportunity is the same as a frequency domain end position of the (n*K+1)^{th} transmission opportunity (refer to a case a in FIG. 15). For another example, a frequency domain end position of the (n+1)^{th} transmission opportunity is the same as a frequency domain start position of the (n*K+1)^{th} transmission opportunity (refer to a case b in FIG. 15). Alternatively, the (n+1)^{th} transmission opportunity and the (n*K+1)^{th} transmission opportunity may not be consecutive in frequency domain. For example, a frequency domain start position of the (n+1)^{th} transmission opportunity is above a frequency domain end position of the (n*K+1)^{th} transmission opportunity, or a frequency domain end position of the (n+1)^{th} transmission opportunity is below a frequency domain start position of the (n*K+1)^{th} transmission opportunity.

It may be understood that, when the (n+1)^{th} transmission opportunity and the (n*K+1)^{th} transmission opportunity may completely overlap in time domain, and the (n+1)^{th} transmission opportunity and the (n*K+1)^{th} transmission opportunity may be consecutive in frequency domain (that is, the case a and the case b shown in FIG. 15), the terminal device may alternatively send one transport block on the first transmission opportunity and the second transmission opportunity, where the transport block includes all data packets of the first video frame.

In the manner 2, the N transmission opportunities are indicated by the access network device to the terminal device, so that it is convenient to reduce processing load of the terminal device. Further, the (n+1)^{th} transmission opportunity in the N transmission opportunities and the (n*K+1)^{th} transmission opportunity in the M transmission opportunities satisfy the condition 1 or the condition 2. In other words, the second transmission opportunity is before a next transmission opportunity of the first transmission opportunity in the M transmission opportunities. Therefore, in comparison with the case a in FIG. 4, a resource waste problem can be effectively avoided, and in comparison with the case b in FIG. 4, a transmission latency of a video frame can be effectively reduced.

It may be understood that, in another possible embodiment, if a video frame corresponding to the first transmission opportunity belongs to the first-type video frame, the terminal device may send the first video frame to the access network device on the first transmission opportunity; and correspondingly, the access network device receives the first video frame from the terminal device on the first transmission opportunity.

According to the method in Embodiment 2, after the access network device indicates the M transmission opportunities to the terminal device, if the amount of data that can be carried on each of the M transmission opportunities matches the data amount of the first-type video frame, when the first video frame corresponding to the first transmission opportunity in the M transmission opportunities belongs to the second-type video frame, the terminal device may send the first video frame to the access network device on the first transmission opportunity and the second transmission opportunity, where the amounts of data that can be carried on the first transmission opportunity and the second transmission opportunity matches the data amount of the second-type video frame. In this way, a problem that an amount of data that can be carried on a transmission opportunity does not match a data amount of a video frame can be effectively resolved, and the access network device and the terminal device can transmit a video frame in a semi-static scheduling manner.

Embodiment 3 is described by using uplink transmission as an example, and the solution in Embodiment 3 is also applicable to downlink transmission.

### Embodiment 4

In Embodiment 4, uplink transmission is used as an example for description.

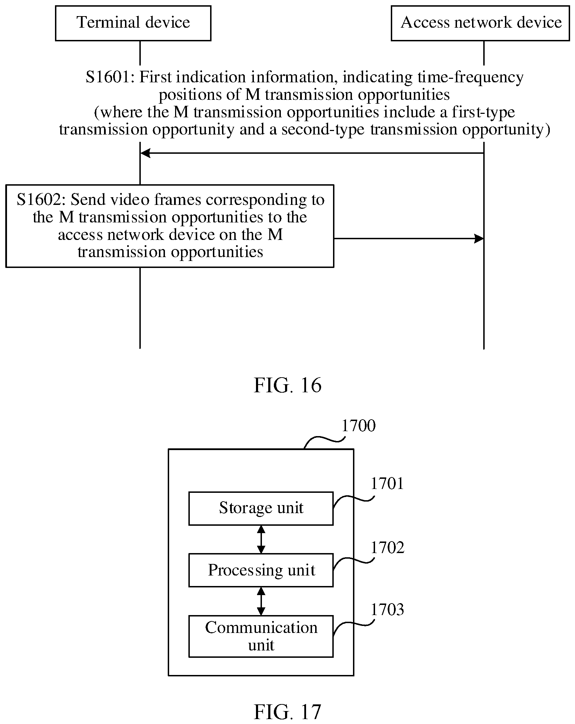

FIG. 16 is a schematic flowchart corresponding to a communication method according to Embodiment 4 of this application. In FIG. 16, an example in which a terminal device and an access network device are used as execution entities of an interaction illustration is used for illustrating the method. However, this application does not limit the execution entities of the interaction illustration. For example, the terminal device in FIG. 16 may alternatively be a chip, a chip system, or a processor that supports the terminal device in implementing the method. The access network device in FIG. 16 may alternatively be a chip, a chip system, or a processor that supports the access network device in implementing the method, or may be a logical module or software that can implement all or some of functions of the access network device.

As shown in FIG. 16, the method includes the following steps:
S1601: The access network device sends first indication information to the terminal device, where the first indication information indicates time-frequency positions of M transmission opportunities; and correspondingly, the terminal device may receive the first indication information.

Herein, the M transmission opportunities include a first-type transmission opportunity and a second-type transmission opportunity, and amounts of data that can be carried on the first-type transmission opportunity and the second transmission opportunity are different. The M transmission opportunities may be in one-to-one correspondence with M video frames of a first service. For example, the access network device may configure periodicity parameters of the M transmission opportunities based on a transmission periodicity (for example, 16.67 ms) of the video frame of the first service. The M video frames of the first service may include a first-type video frame and a second-type video frame, a video frame corresponding to the first-type transmission opportunity belongs to the first-type video frame, and a video frame corresponding to the second-type transmission opportunity belongs to the second-type video frame. An amount of data that can be carried on the first-type transmission opportunity matches a data amount of the first-type video frame, and an amount of data that can be carried on the second-type transmission opportunity matches a data amount of the second-type video frame.

In a possible implementation, the first indication information may include a length sequence, and the length sequence includes K elements. For example, the length sequence is {L2, L1, ..., L1}. For example, L2=L1*ceil(α).

The length sequence includes the K elements. Therefore, starting from a 1^{st} transmission opportunity in the M transmission opportunities, for every K transmission opportunities, the terminal device may determine that a time domain length of a 1^{st} transmission opportunity in the K transmission opportunities is L2, and a time domain length of each of 2^{nd} to K^{th} transmission opportunities is L1. Alternatively, the terminal device may determine that a frequency domain width of the 1^{st} transmission opportunity in the K transmission opportunities is L2, and a frequency domain width of each of the 2^{nd} to the K^{th} transmission opportunities is L1. In other words, the 1^{st} transmission opportunity in every K transmission opportunities is the second-type transmission opportunity, and the 2^{nd} to the K^{th} transmission opportunities are all first-type transmission opportunities.

For example, the access network device may send the length sequence to the terminal device in a plurality of manners. For example, the element in the length sequence is a time domain length and the M transmission opportunities belong to one set of transmission opportunities. In an example, the access network device may indicate the length sequence by using an SLIV, or the access network device may not indicate a time domain length of a transmission opportunity in an SLIV, and additionally send the length sequence (where in this case, the SLIV and the length sequence may be carried in a same message or different messages).

In another possible implementation, the first indication information includes a basic length (which is denoted as L) and a length scale factor sequence, and the length scale factor sequence includes K elements. For example, the length scale factor sequence is {ceil(α), 1, ..., 1}.

The length scale factor sequence includes the K elements. Therefore, starting from a 1^{st} transmission opportunity in the M transmission opportunities, for every K transmission opportunities, the terminal device may determine that a time domain length of a 1^{st} transmission opportunity in the K transmission opportunities is L*ceil(α), and a time domain length of each of 2^{nd} to K^{th} transmission opportunities is L. Alternatively, the terminal device may determine that a frequency domain width of the 1^{st} transmission opportunity in the K transmission opportunities is L*ceil(α), and a frequency domain width of each of the 2^{nd} to the K^{th} transmission opportunities is L. In other words, the 1^{st} transmission opportunity in every K transmission opportunities is the second-type transmission opportunity, and the 2^{nd} to the K^{th} transmission opportunities are all first-type transmission opportunities.

For example, the basic length is a time domain length and the M transmission opportunities belong to one set of transmission opportunities. The access network device may indicate the basic length by using an SLIV, and additionally send the length scale factor sequence (where in this case, the SLIV and the length scale factor sequence may be carried in a same message or different messages).

In still another possible implementation, the first indication information includes K, L1, and L2. For example, L2=L1*ceil(α).

Starting from a 1^{st} transmission opportunity in the M transmission opportunities, for every K transmission opportunities, the terminal device may determine, based on the first indication information, that the time domain length of the 1^{st} transmission opportunity in the K transmission opportunities is L2, and the time domain length of each of the 2^{nd} to the K^{th} transmission opportunities is L1. Alternatively, the terminal device may determine that the frequency domain width of the 1^{st} transmission opportunity in the K transmission opportunities is L2, and the frequency domain width of each of the 2^{nd} to the K^{th} transmission opportunities is L1. In other words, the 1^{st} transmission opportunity in every K transmission opportunities is the second-type transmission opportunity, and the 2^{nd} to the K^{th} transmission opportunities are all first-type transmission opportunities.

For example, L1 and L2 are time domain lengths, and the M transmission opportunities belong to one set of transmission opportunities. The access network device may indicate two time domain lengths (namely, L1 and L2) by using an SLIV, and additionally indicate a value of K to the terminal device.

It may be understood that the first indication information may further include other possible information, for example, a periodicity parameter. For details, refer to the descriptions in Embodiment 1.

S1602: The terminal device sends video frames corresponding to the M transmission opportunities to the access network device on the M transmission opportunities, that is, sends the first-type video frame to the access network device on the first-type transmission opportunity, and sends the second-type video frame to the access network device on the second-type transmission opportunity; and correspondingly, the access network device may respectively receive the video frames corresponding to the M transmission opportunities on the M transmission opportunities.

According to the method in Embodiment 4, the access network device may configure the M transmission opportunities for the terminal device, and the amount of data that can be carried on the first-type transmission opportunity is different from the amount of data that can be carried on the second-type transmission opportunity in the M transmission opportunities. In this way, a problem that an amount of data that can be carried on a transmission opportunity does not match a data amount of a video frame can be effectively resolved, and the access network device and the terminal device can transmit a video frame in a semi-static scheduling manner.

Embodiment 4 is described by using uplink transmission as an example, and the solution in Embodiment 4 is also applicable to downlink transmission.

For Embodiment 1 to Embodiment 4, it may be understood that:
(1) The foregoing focuses on differences between different embodiments in Embodiment 1 to Embodiment 4, and content other than the differences may be mutually referenced in Embodiment 1 to Embodiment 4. In addition, in a same embodiment, different implementations or different examples may also be mutually referenced.
(2) In the foregoing embodiments, an example in which the amount of data that can be carried on each of the M transmission opportunities matches the data amount of the first-type video frame is used for description. In this case, when the first video frame corresponding to the first transmission opportunity belongs to the first-type video frame, the terminal device and the access network device may extend the first transmission opportunity, to obtain the second transmission opportunity. In another possible embodiment, the amount of data that can be carried on each of the M transmission opportunities may also match the data amount of the second-type video frame. In this case, when the first video frame corresponding to the first transmission opportunity belongs to the first-type video frame, the terminal device and the access network device may reduce the first transmission opportunity, to obtain the second transmission opportunity.

The foregoing mainly describes the solutions provided in embodiments of this application from a perspective of interaction between communication apparatuses. It may be understood that, to implement the foregoing functions, an access network device and a terminal device may include corresponding hardware structures and/or software modules for implementing functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the access network device and the terminal device based on the foregoing method examples. For example, each functional unit may be obtained through division based on a corresponding function, or two or more functions may be integrated into one unit. The integrated unit may be implemented in a form of hardware, or may be implemented in a form of a software functional unit.

When an integrated unit is used, FIG. 17 is a block diagram of a possible example of an apparatus according to an embodiment of this application. As shown in FIG. 17, an apparatus 1700 may include a processing unit 1702 and a communication unit 1703. The processing unit 1702 is configured to control and manage an action of the apparatus 1700. The communication unit 1703 is configured to support communication between the apparatus 1700 and another device. Optionally, the communication unit 1703 is also referred to as a transceiver unit, and may include a receiving unit and/or a sending unit, respectively configured to perform a receiving operation and a sending operation. The apparatus 1700 may further include a storage unit 1701, configured to store program code and/or data of the apparatus 1700.

The apparatus 1700 may be the terminal device in the foregoing embodiments. The processing unit 1702 may support the apparatus 1700 in performing actions of the terminal device in the foregoing method examples. Alternatively, the processing unit 1702 mainly performs an internal action of the terminal device in the method examples, and the communication unit 1703 may support communication between the apparatus 1700 and another device.

For example, in an embodiment, the communication unit 1703 is configured to receive first indication information from an access network device, where the first indication information indicates time-frequency positions of M transmission opportunities, an amount of data that can be carried on each of the M transmission opportunities matches a data amount of a first-type video frame, and the data amount of the first-type video frame is less than a data amount of a second-type video frame. The M transmission opportunities include a first transmission opportunity, the first transmission opportunity corresponds to a first video frame, and M is a positive integer. If the first video frame belongs to the second-type video frame, the first video frame is sent to the access network device on a second transmission opportunity, where an amount of data that can be carried on the second transmission opportunity matches the data amount of the second-type video frame.

The apparatus 1700 may be the access network device in the foregoing embodiments. The processing unit 1702 may support the apparatus 1700 in performing actions of the access network device in the foregoing method examples. Alternatively, the processing unit 1702 mainly performs an internal action of the access network device in the method examples, and the communication unit 1703 may support communication between the apparatus 1700 and another device.

For example, in an embodiment, the communication unit 1703 is configured to send first indication information to a terminal device, where the first indication information indicates time-frequency positions of M transmission opportunities, an amount of data that can be carried on each of the M transmission opportunities matches a data amount of a first-type video frame, and the data amount of the first-type video frame is less than a data amount of a second-type video frame. The M transmission opportunities include a first transmission opportunity, the first transmission opportunity corresponds to a first video frame, and M is a positive integer. If the first video frame belongs to the second-type video frame, the first video frame is sent to the access network device on a second transmission opportunity, where an amount of data that can be carried on the second transmission opportunity matches the data amount of the second-type video frame.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware, or some units may be implemented in a form of software invoked by a processing element, and some units may be implemented in a form of hardware. For example, the units may be processing elements that are separately disposed, or may be integrated into a chip of the apparatus for implementation. In addition, the units may alternatively be stored in a memory in a form of a program, and are invoked by a processing element of the apparatus to perform functions of the units. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing method, for example, one or more application-specific integrated circuits (application-specific integrated circuit, ASIC), one or more microprocessors (digital signal processor, DSP), or one or more field programmable gate arrays (field programmable gate arrays, FPGAs), or a combination of at least two of these integrated circuit forms. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

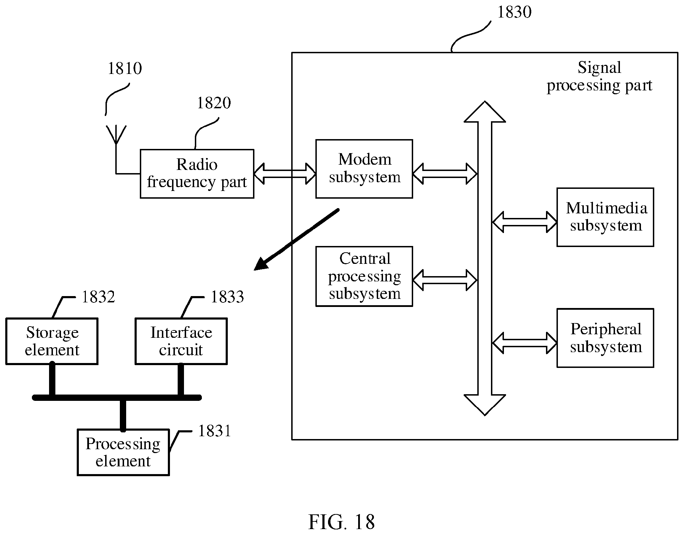

FIG. 18 is a diagram of a structure of a terminal device according to an embodiment of this application. The terminal device may be used in the communication system shown in FIG. 1, to implement operations of the terminal device in the foregoing embodiments. As shown in FIG. 18, the terminal device includes an antenna 1810, a radio frequency part 1820, and a signal processing part 1830. The antenna 1810 is connected to the radio frequency part 1820. In a downlink direction, the radio frequency part 1820 receives, through the antenna 1810, information sent by an access network device, and sends, to the signal processing part 1830 for processing, the information sent by the access network device. In an uplink direction, the signal processing part 1830 processes information of the terminal device, and sends the information to the radio frequency part 1820. The radio frequency part 1820 processes the information of the terminal device, and then sends the processed information to the access network device through the antenna 1810.

The signal processing part 1830 may include a modem subsystem, configured to process data at each communication protocol layer. The signal processing part 1830 may further include a central processing subsystem, configured to process an operating system and an application layer of the terminal device. In addition, the signal processing part 1830 may further include another subsystem, for example, a multimedia subsystem or a peripheral subsystem. The multimedia subsystem is configured to control a camera, a screen display, and the like of the terminal device. The peripheral subsystem is configured to connect to another device. The modem subsystem may be a separately disposed chip.

The modem subsystem may include one or more processing elements 1831, for example, include a main control CPU and another integrated circuit. In addition, the modem subsystem may further include a storage element 1832 and an interface circuit 1833. The storage element 1832 is configured to store data and a program. However, a program for performing the methods performed by the terminal device in the foregoing methods may not be stored in the storage element 1832, but is stored in a memory outside the modem subsystem, and is loaded by the modem subsystem for use. The interface circuit 1833 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the methods performed by the terminal device in the foregoing method embodiments. The storage element may be a storage element whose processing element is located on a same chip, that is, an on-chip storage element.

In another implementation, the program for performing the methods performed by the terminal device in the foregoing methods may be in a storage element located on a different chip from the processing element, that is, an off-chip storage element. In this case, the processing element invokes or loads the program from the off-chip storage element to the on-chip storage element, to invoke and perform the methods performed by the terminal device in the foregoing method embodiments.

In still another implementation, units of the terminal device that implement the steps in the foregoing methods may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing methods may be integrated together, and implemented in a form of SoC. The SoC chip is configured to implement the foregoing methods. At least one processing element and a storage element may be integrated into the chip, and the processing element invokes a program stored in the storage element to implement the foregoing methods performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processor element in combination with instructions; or may certainly perform, by combining the first manner and the second manner, some or all steps performed by the terminal device.

The processing element herein is the same as that described above, and may be implemented through a processor. A function of the processing element may be the same as a function of the processing unit described in FIG. 17. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented through a memory. A function of the storage element may be the same as a function of the storage unit described in FIG. 17. The storage element may be a memory, or may be a general name of a plurality of memories.

The terminal device shown in FIG. 18 can implement all processes related to the terminal device in the foregoing method embodiments. Operations and/or functions of the modules in the terminal device shown in FIG. 18 are intended to implement the corresponding procedures in the foregoing method embodiments. For details, refer to the descriptions in the foregoing method embodiments. To avoid repetition, detailed descriptions are properly omitted herein.

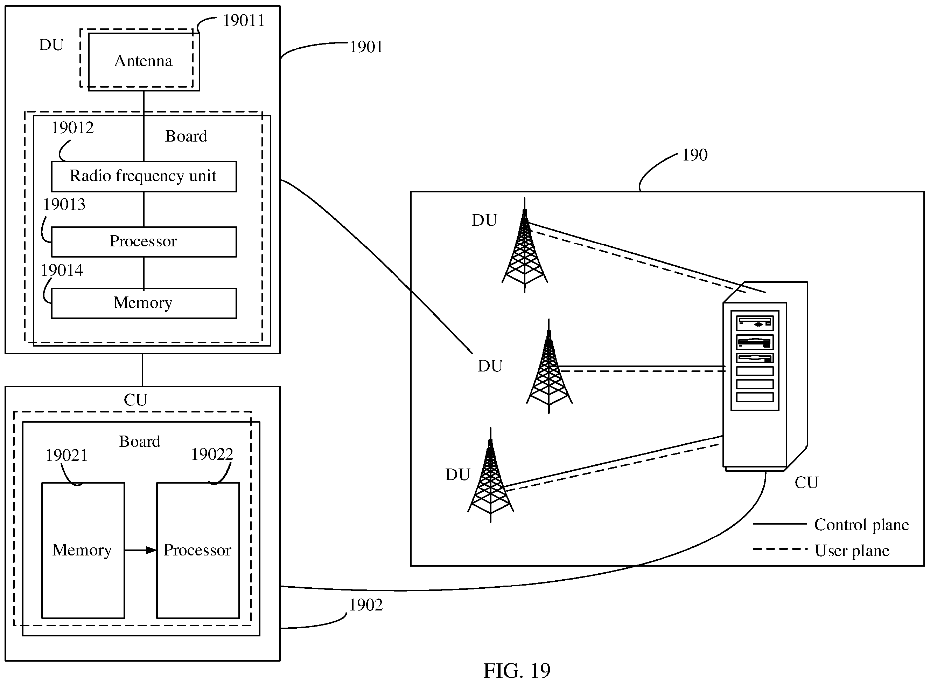

FIG. 19 is a diagram of a structure of an access network device according to an embodiment of this application. The access network device (or base station) may be used in the communication system shown in FIG. 1, to perform functions of the access network device in the foregoing method embodiments. As shown in FIG. 19, the access network device 190 may include one or more DUs 1901 and one or more CUs 1902. The DU 1901 may include at least one antenna 19011, at least one radio frequency unit 19012, at least one processor 19013, and at least one memory 19014. The DU 1901 is mainly configured to receive and send a radio frequency signal, convert a radio frequency signal and a baseband signal, and perform some baseband processing. The CU 1902 may include at least one processor 19022 and at least one memory 19021.

The CU 1902 is mainly configured to: perform baseband processing, control the access network device, and the like. The DU 1901 and the CU 1902 may be physically disposed together, or may be physically disposed separately, in other words, may be a distributed base station. The CU 1902 is a control center of the access network device, may also be referred to as a processing unit, and is mainly configured to complete a baseband processing function. For example, the CU 1902 may be configured to control the access network device to perform an operation procedure related to the access network device in the foregoing method embodiments.

In addition, optionally, the access network device 190 may include one or more radio frequency units, one or more DUs, and one or more CUs. The DU may include at least one processor 19013 and at least one memory 19014, the radio frequency unit may include at least one antenna 19011 and at least one radio frequency unit 19012, and the CU may include at least one processor 19022 and at least one memory 19021.

In an example, the CU 1902 may include one or more boards, and a plurality of boards may jointly support a radio access network (for example, a 5G network) of a single access standard, or may separately support radio access networks (such as an LTE network, a 5G network, or another network) of different access standards. The memory 19021 and the processor 19022 may serve one or more boards. In other words, a memory and a processor may be disposed on each board. Alternatively, a plurality of boards may share a same memory and a same processor. In addition, a necessary circuit may further be disposed on each board. The DU 1901 may include one or more boards, and a plurality of boards may jointly support a radio access network (for example, a 5G network) of a single access standard, or may separately support radio access networks (such as an LTE network, a 5G network, or another network) of different access standards. The memory 19014 and the processor 19013 may serve one or more boards. In other words, a memory and a processor may be disposed on each board. Alternatively, a plurality of boards may share a same memory and a same processor. In addition, a necessary circuit may further be disposed on each board.

The access network device shown in FIG. 19 can implement all processes related to the access network device in the foregoing method embodiments. Operations and/or functions of the modules in the access network device shown in FIG. 19 are intended to implement the corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A communication method, wherein the method comprises:
receiving first indication information from an access network device, wherein the first indication information indicates time-frequency positions of M transmission opportunities, an amount of data that can be carried on each of the M transmission opportunities matches a data amount of a first-type video frame, and the data amount of the first-type video frame is less than a data amount of a second-type video frame; and the M transmission opportunities comprise a first transmission opportunity, the first transmission opportunity corresponds to a first video frame, and M is a positive integer; and
if the first video frame belongs to the second-type video frame, sending the first video frame to the access network device on a second transmission opportunity, wherein an amount of data that can be carried on the second transmission opportunity matches the data amount of the second-type video frame.

2. The method according to claim 1, wherein a modulation and coding scheme MCS corresponding to the second transmission opportunity is the same as an MCS corresponding to the first transmission opportunity.

3. The method according to claim 1 or 2, wherein the method further comprises:
determining a time-frequency position of the second transmission opportunity based on a time-frequency position of the first transmission opportunity, the data amount of the first-type video frame, and the data amount of the second-type video frame.

4. The method according to claim 1 or 2, wherein the method further comprises:
receiving second indication information from the access network device, wherein the second indication information indicates time-frequency positions of N transmission opportunities, an amount of data that can be carried on each of the N transmission opportunities matches the data amount of the second-type video frame, the N transmission opportunities comprise the second transmission opportunity, and N is a positive integer:

5. The method according to any one of claims 1 to 4, wherein
a time domain length of the second transmission opportunity is greater than a time domain length of the first transmission opportunity.

6. The method according to claim 5, wherein the first transmission opportunity comprises T1 time units in time domain, and the second transmission opportunity comprises T2 time units in time domain; and
T2=ceil[(α)•T1], or T2=ceil(α)•T1, ceil represents rounding up, α represents a ratio of the data amount of the second-type video frame to the data amount of the first-type video frame, and both T1 and T2 are positive integers.

7. The method according to any one of claims 1 to 4, wherein
a frequency domain width of the second transmission opportunity is greater than a frequency domain width of the first transmission opportunity.

8. The method according to claim 7, wherein the first transmission opportunity comprises P1 resource blocks RBs in frequency domain, and the second transmission opportunity comprises P2 RBs in frequency domain; and
P2=ceil[(α)•P1], or P2=ceil(α)•P1, ceil represents rounding up, α represents a ratio of the data amount of the second-type video frame to the data amount of the first-type video frame, and both P1 and P2 are positive integers.

9. The method according to claim 1, wherein a time-frequency position of the second transmission opportunity is the same as a time-frequency position of the first transmission opportunity.

10. The method according to claim 9, wherein the method further comprises:
determining an MCS corresponding to the second transmission opportunity based on an MCS corresponding to the first transmission opportunity, the data amount of the first-type video frame, and the data amount of the second-type video frame.

11. The method according to claim 9, wherein the method further comprises:
receiving third indication information from the access network device, wherein the third indication information indicates an MCS corresponding to the second transmission opportunity, or an offset between the MCS corresponding to the second transmission opportunity and an MCS corresponding to the first transmission opportunity.

12. The method according to any one of claims 1 to 11, wherein the method further comprises:
receiving fourth indication information from the access network device, wherein the fourth indication information indicates the MCS corresponding to the first transmission opportunity.

13. The method according to any one of claims 1 to 12, wherein the method further comprises:
if the first transmission opportunity is an (n*K+1)^{th} transmission opportunity in the M transmission opportunities, determining that the first video frame belongs to the second-type video frame, wherein
n is an integer greater than or equal to 0, and K is a quantity of video frames comprised in a transmission periodicity of the second-type video frame.

14. The method according to any one of claims 1 to 12, wherein the M transmission opportunities further comprise a third transmission opportunity before the first transmission opportunity, the third transmission opportunity corresponds to a second video frame, and the second video frame belongs to the second-type video frame; and
the method further comprises:
if a time interval between a time domain start position of the first transmission opportunity and a time domain start position of the third transmission opportunity is equal to first duration, and the first duration is equal to a transmission periodicity of the second-type video frame, determining that the first video frame belongs to the second-type video frame.

15. The method according to any one of claims 1 to 12, wherein the first video frame comprises a type identifier, and the type identifier indicates that the first video frame belongs to the second-type video frame.

16. A communication method, wherein the method comprises:
sending first indication information to a terminal device, wherein the first indication information indicates time-frequency positions of M transmission opportunities, an amount of data that can be carried on each of the M transmission opportunities matches a data amount of a first-type video frame, and the data amount of the first-type video frame is less than a data amount of a second-type video frame; and the M transmission opportunities comprise a first transmission opportunity, the first transmission opportunity corresponds to a first video frame, and M is a positive integer; and
if the first video frame belongs to the second-type video frame, sending the first video frame to an access network device on a second transmission opportunity, wherein an amount of data that can be carried on the second transmission opportunity matches the data amount of the second-type video frame.

17. The method according to claim 16, wherein an MCS corresponding to the second transmission opportunity is the same as an MCS corresponding to the first transmission opportunity.

18. The method according to claim 16 or 17, wherein the method further comprises:
determining a time-frequency position of the second transmission opportunity based on a time-frequency position of the first transmission opportunity, the data amount of the first-type video frame, and the data amount of the second-type video frame.

19. The method according to any one of claims 16 to 18, wherein the method further comprises:
sending second indication information to the terminal device, wherein the second indication information indicates time-frequency positions of N transmission opportunities, an amount of data that can be carried on each of the N transmission opportunities matches the data amount of the second-type video frame, the N transmission opportunities comprise the second transmission opportunity, and N is a positive integer.

20. The method according to any one of claims 16 to 19, wherein
a time domain length of the second transmission opportunity is greater than a time domain length of the first transmission opportunity.

21. The method according to claim 20, wherein the first transmission opportunity comprises T1 time units in time domain, and the second transmission opportunity comprises T2 time units in time domain; and
T2=ceil[(α)•T1], or T2=ceil(α)•T1, ceil represents rounding up, α represents a ratio of the data amount of the second-type video frame to the data amount of the first-type video frame, and both T1 and T2 are positive integers.

22. The method according to any one of claims 16 to 19, wherein
a frequency domain width of the second transmission opportunity is greater than a frequency domain width of the first transmission opportunity.

23. The method according to claim 22, wherein the first transmission opportunity comprises P1 resource blocks RBs in frequency domain, and the second transmission opportunity comprises P2 RBs in frequency domain; and
P2=ceil[(α)•P1], or P2=ceil(α)•P1, ceil represents rounding up, α represents a ratio of the data amount of the second-type video frame to the data amount of the first-type video frame, and both P1 and P2 are positive integers.

24. The method according to claim 16, wherein a time-frequency position of the second transmission opportunity is the same as a time-frequency position of the first transmission opportunity.

25. The method according to claim 24, wherein the method further comprises:
determining an MCS corresponding to the second transmission opportunity based on an MCS corresponding to the first transmission opportunity, the data amount of the first-type video frame, and the data amount of the second-type video frame.

26. The method according to claim 24 or 25, wherein the method further comprises:
sending third indication information to the terminal device, wherein the third indication information indicates an MCS corresponding to the second transmission opportunity, or an offset between the MCS corresponding to the second transmission opportunity and an MCS corresponding to the first transmission opportunity.

27. The method according to any one of claims 16 to 26, wherein the method further comprises:
sending fourth indication information to the terminal device, wherein the fourth indication information indicates the MCS corresponding to the first transmission opportunity.

28. The method according to any one of claims 16 to 27, wherein the method further comprises:
if the first transmission opportunity is an (n*K+1)^{th} transmission opportunity in the M transmission opportunities, determining that the first video frame belongs to the second-type video frame, wherein
n is an integer greater than or equal to 0, and K is a quantity of video frames comprised in a transmission periodicity of the second-type video frame.

29. The method according to any one of claims 16 to 27, wherein the M transmission opportunities further comprise a third transmission opportunity before the first transmission opportunity, the third transmission opportunity corresponds to a second video frame, and the second video frame belongs to the second-type video frame; and
the method further comprises:
if a time interval between a time domain start position of the first transmission opportunity and a time domain start position of the third transmission opportunity is equal to first duration, and the first duration is equal to a transmission periodicity of the second-type video frame, determining that the first video frame belongs to the second-type video frame.

30. The method according to any one of claims 16 to 27, wherein the first video frame comprises a type identifier, and the type identifier indicates that the first video frame belongs to the second-type video frame.

31. A communication apparatus, comprising a processor, wherein the processor is coupled to a memory, the memory stores a computer program, and the processor is configured to invoke the computer program in the memory, to enable the communication apparatus to perform the method according to any one of claims 1 to 15 or the method according to any one of claims 16 to 30.

32. A computer-readable storage medium, wherein the storage medium stores a computer program or instructions, and when the computer program or the instructions are executed by a computer, the method according to any one of claims 1 to 15 or the method according to any one of claims 16 to 30 is implemented.

33. A computer program product, wherein when a computer reads and executes the computer program product, the computer is enabled to perform the method according to any one of claims 1 to 15 or the method according to any one of claims 16 to 30.
